(19) Europäisches Patentamt
European Patent Office
Office européen des brevets

(11) **EP 2 099 996 B1**

(12) **EUROPÄISCHE PATENTSCHRIFT**

(45) Veröffentlichungstag und Bekanntmachung des Hinweises auf die Patenterteilung:
**17.11.2010  Patentblatt 2010/46**

(21) Anmeldenummer: **07856750.0**

(22) Anmeldetag: **14.12.2007**

(51) Int Cl.:
***E06B 3/67*** *(2006.01)*

(86) Internationale Anmeldenummer:
**PCT/EP2007/011012**

(87) Internationale Veröffentlichungsnummer:
**WO 2008/077512 (03.07.2008 Gazette 2008/27)**

(54) **WÄRMEDÄMMENDES VERGLASUNGSELEMENT, DESSEN HERSTELLUNG UND VERWENDUNG**

THERMALLY-INSULATING GLAZING ELEMENT PRODUCTION AND USE THEREOF

ÉLÉMENT DE VITRAGE THERMO-ISOLANT, SON MODE DE PRODUCTION ET SON UTILISATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006  DE 102006061360**

(43) Veröffentlichungstag der Anmeldung:
**16.09.2009  Patentblatt 2009/38**

(73) Patentinhaber: **Futech Gmbh**
**39124 Magdeburg (DE)**

(72) Erfinder: **JÄGER, Steffen**
**38122 Braunschweig (DE)**

(74) Vertreter: **Hertz, Oliver**
**v. Bezold & Partner**
**Patentanwälte**
**Akademiestrasse 7**
**80799 München (DE)**

(56) Entgegenhaltungen:
**EP-A- 1 529 921    WO-A-91/02878**
**WO-A-93/15296    US-B1- 6 478 911**

**Beschreibung**

Die Erfindung betrifft ein wärmedämmendes Verglasungselement mit den Merkmalen des Oberbegriffs von Anspruch 1, ein Bauelement, das ein derartiges Verglasungselement enthält, und Verfahren zur Herstellung des Verglasungselementes und des Bauteils und deren Verwendung.

In WO 91/02878 und WO 93/15296 wird ein Vakuum-Isolierglas vorgeschlagen, das aus zwei benachbarten Glasscheiben besteht, die einen evakuierten Raum einschließen. Die Glasscheiben sind durch Abstandhalter beabstandet und durch eine umlaufende Randdichtung miteinander verbunden. Die Erzeugung des Vakuums zwischen den Glasscheiben erfolgt über eine Öffnung in einer der Glasscheiben. Die bekannten Vakuum-Isoliergläser haben sich am Markt bisher nicht durchsetzen können. Mit den heute kommerziell erhältlichen Vakuum-Isoliergläser sind bisher nur ungenügende Wärmedämmwerte (U-Werte) von lediglich 1,0 W/(m²K) oder schlechter erhalten worden, die jedoch schon mit Standard-Isoliergläsern problemlos erreicht werden. Zwar ist aus der Forschung im Labormaßstab bekannt, dass U-Werte von bis zirka 0,4 W/(m²K)- erreicht werden, jedoch waren diese Ergebnisse praktisch auf kleinformatige Labormuster beschränkt. Eine Überführung der Laborversuche auf größere Formate von mindestens 0,8 m² und darüber ist bisher nicht gelungen. Dies ist vor allem darauf zurückzuführen, dass mit den bekannten Vakuum-Isoliergläsern eine Reihe von ungelösten praxisbezogenen Problemen in dessen Funktionalität und Gebrauchsfähigkeit verbunden sind. So treten bei den bekannten Vakuum-Isoliergläsern in der praktischen Verwendung sehr häufig Beschädigungen oder Schäden in Form von Glasbruch, Undichtigkeiten oder Vakuumverlusten und dergleichen auf, die in vielen Fällen zu einer vollständigen Unbrauchbarkeit bzw. zu einem kompletten Versagen des Bauteiles führen können. Besonders betroffen sind dabei die Bereiche im Randverbund und vor allem an den Ecken. Wie sich gezeigt hat, offenbaren sich diese Unzulänglichkeiten aber erst bei größeren geometrischen Abmessungen von mindestens zirka 0,4 m² und vor allem darüber, während bei den kleinen Labormustern im Format von typischerweise maximal 500 mm x 500 mm (bis zu Flächen von maximal 0,25m²) sich derartige Erscheinungen nicht beobachten lassen.

Einige der Nachteile und weitere technologiebezogene Probleme der bekannten Vakuum-Isoliergläser sind nachstehend näher beschrieben. Die Vakuum-Isoliergläser müssen in der praktischen Anwendung sehr unterschiedlichen, ggf. extremen äußeren Bedingungen ohne jeglichen Funktionsverlust und Schaden gerecht werden. Derartige wechselnde Bedingungen sind z. B. mit den jahreszeitlich unterschiedlichen Wetterbedingungen verknüpft. So erreichen die Außentemperaturen im Winter durchaus Werte von -20°C bis -25°C und darunter, während die Temperaturen im Gebäudeinneren typischerweise bei +20°C liegen. Eine Temperaturdifferenz zwischen der Innen- und Außenscheibe von 40K bis 50K und mehr ist somit keine Seltenheit. Derart hohe Temperaturunterschiede treten auch bei Vakuum-Isoliergläser in Kühleinrichtungen auf. Des Weiteren werden die Vakuum-Isoliergläser im Sommer hohen Aufheizungen ausgesetzt. Neben den hohen äußeren Lufttemperaturen von 30°C bis 40°C kommt es zu hohen Sonneneinstrahlungen mit Werten von typischerweise mindestens 800 W/m² bis 1.200 W/m². Es kann auch vorkommen, dass die nach innen gerichteten Gläser noch zusätzlich konvektiv durch zum Beispiel Klimaanlagen gekühlt und/oder durch hohe Luftfeuchtigkeiten (zum Beispiel im Bad- und Sanitärbereich) beansprucht werden. Aber auch die nach außen gerichteten Gläser können einer zusätzlichen Beaufschlagung durch zum Beispiel Wind, Regen, Schnee, Eisregen usw. unterliegen. Um eine vollständige Gebrauchsfähigkeit zu erhalten, müssen die Vakuum-Isoliergläser diesen komplexen Anforderungen in ihrer Gesamtheit gerecht werden. Wie die Praxis zeigt, lässt sich dies mit den herkömmlichen Vakuum-Isoliergläsern bisher nicht oder nur sehr eingeschränkt erreichen.

Durch die genannten Temperaturdifferenzen zwischen der äußeren und inneren Scheibe kommt es bei den Vakuum-Isoliergläsern - ähnlich dem Bimetall-Effekt - zu Verbiegungen, die überwiegend durch die Vakuum-Randabdichtung kompensiert werden müssen. Die damit verbundenen enorm großen Scherkräfte im Bereich der Vakuum-Randabdichtung und/oder auch die überhöhten Zugspannungen auf den Glasoberflächen führen zu einer Beschädigung oder Zerstörung des gesamten Verglasungselementes. Die auftretenden Kräfte können dabei Werte von bis zu 20 MPa und darüber erreichen. Ganz besonders nachteilig tritt dies in Fällen in Erscheinung, bei denen die Vakuum-Isoliergläser zudem eine sehr gute Wärmedämmung (U-Wert in der Bauteilmitte) von typischerweise kleiner oder gleich 0,8 W/(m²K) besitzen, da gerade hier der Wärmeaustausch und somit letztendlich die Temperaturangleichung zwischen den Gläsern nahezu vollständig unterbunden wird. Dieses Problem ist bei den sehr gut wärmedämmenden Vakuum-Isoliergläsern mit Größen von 0,4m² und darüber bisher noch nicht gelöst.

Ein weiterer Nachteil ist darin zu sehen, dass die zwischen den Einzelgläsern angebrachten Abstandhalter Kältebrücken darstellen und es deswegen vorkommen kann, dass bevorzugt an den Positionen der Abstandhalter unerwünschte lokal begrenzte Kondensationen beobachtet werden. Dieser Effekt tritt um so mehr in Erscheinung, je geringer die Temperatur auf einer Seite der Verglasung ist und je größer auch die resultierende Temperaturdifferenz zwischen den beiden Glasscheiben ist. Besonders störend zeigt sich dies bei Außenverglasungen in der kalten Jahreszeit oder bei Vakuum-Isoliergläsern in Kühlaggregaten. Die bekannten Vakuum-Isoliergläser sind nicht geeignet, diesen unerwünschten Effekt ausreichend zu minimieren oder zu vermeiden.

Nachteilig bei den herkömmlichen Vakuum-Isolierverglasungen ist auch, dass diese nicht in beliebigen geometrischen Formen, Konturen und Größen vollständig gebrauchsfähig herstellbar sind. Dies gilt in besonderem Maße auch für gebogene, gekrümmte oder sonstige, von einer Planität abweichend geformte Vakuum-Isoliergläser.

Von weiterem Nachteil ist, dass die herkömmlichen Vakuum-Isoliergläser gegenüber den konventionellen Isoliergläsern deutlich teurer sind. Bisher ist es nicht gelungen, die Kosten durch eine verbesserte Verfahrenstechnologie entscheidend zu reduzieren.

Die Aufgabe der Erfindung ist es, ein verbessertes wärmedämmendes Verglasungselement bereitzustellen, mit dem die Nachteile herkömmlicher Vakuum-Isoliergläser überwunden werden. Die Aufgabe der Erfindung ist es des Weiteren, ein verbessertes Bauteil mit einem derartigen Verglasungselement und kostengünstige Verfahren zur Herstellung des Verglasungselementes und des Bauteils bereitzustellen.

Diese Aufgaben werden durch ein wärmedämmendes Verglasungselement, ein Bauteil und Verfahren mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt der Erfindung wird ein Verglasungselement bereitgestellt, das eine erste, nach außen gerichtete Glasplatte, eine zweite, nach innen gerichtete Glasplatte und mindestens eine dritte, zwischen den ersten und zweiten Glasplatten angeordnete Glasplatte aufweist, wobei die Glasplatten die folgenden Bedingungen erfüllen. Es gilt für die solare Absorption $A_1$ der ersten (stets nach außen gerichteten) Glasplatte und für die solare Absorption $A_2$ der zweiten (stets nach innen gerichteten) Glasplatte die Bedingung

$$0,3 \leq (A_1 \; / \; A_2) \leq 4 \qquad\qquad\qquad (1)$$

wobei für die solare Absorption $A_3$ der dritten (stets dazwischen liegenden) Glasplatte gleichzeitig die Bedingung

$$A_3 \leq 0,17 \qquad\qquad\qquad\qquad\qquad , \quad (2)$$

(vorzugsweise $A_3 \leq 0,10$) gilt. Ein weiteres wichtiges Merkmal des erfindungsgemäßen Verglasungselements besteht darin, dass mindestens eine der inneren Oberflächen der Glasplatten eine niedrig emittierende Beschichtung trägt. Die niedrig emittierende Beschichtung zeichnet sich durch einen Emissionsgrad aus, der vorzugsweise $\leq 0,16$, besonders bevorzugt $\leq 0,09$, wie z. B. $= 0,05$ ist. Vorteilhafterweise wirkt die mindestens eine niedrig emittierende Beschichtung mit den solaren Absorptionen gemäß den genannten Bedingungen (1) und (2) so zusammen, dass thermische Spannungen bei großen Temperaturunterschieden auf den Außen- und Innenseiten des Verglasungselements vermieden werden.

Gemäß einem zweiten Gesichtspunkt der Erfindung wird ein Bauelement bereitgestellt, das mindestens ein erfindungsgemäßes Verglasungselement aufweist. Das erfindungsgemäße Bauelement umfasst eine Zusammensetzung des mindestens einen erfindungsgemäßen Verglasungselements mit mindestens einem weiteren Glasbauteil, das mindestens eine Glasplatte oder mindestens ein Glasplattensystem umfasst. Es kann bspw. ein zusätzliches Glasbauteil einseitig auf dem Verglasungselement angeordnet sein. Alternativ können mehrere Glasbauteile ein- oder beidseitig auf dem Verglasungselement angeordnet sein. Im erfindungsgemäßen Bauelement kann mindestens ein erfindungsgemäßes Verglasungselement mit einem herkömmlichen Isolierglasaufbau kombiniert sein.

Gemäß einem dritten Gesichtspunkt der Erfindung wird ein Verfahren zur Herstellung des erfindungsgemäßen Verglasungselements bereitgestellt, bei dem die Glasplatten, die das Verglasungselement bilden, als Glasplattenstapel einer thermischen Härtung unterzogen werden.

Der Erfinder hat festgestellt, dass bei Realisierung eines Verglasungselements, das die genannten Bedingungen erfüllt, die Nachteile herkömmlicher Vakuum-Isoliergläser überwunden werden können. Er hat insbesondere bei den durchgeführten Versuchen festgestellt, dass überraschenderweise eine vollständige Gebrauchsfähigkeit des erfindungsgemäßen Verglasungselements oder des mit diesem gebildeten Bauelements bei Einwirken der unterschiedlichsten, mitunter extremen äußeren Bedingungen unabhängig von dessen geometrischen Größe erreicht wird. Dadurch, dass das erfindungsgemäße Verglasungselement so aufgebaut ist, dass die Bedingungen (1) und (2) für die solaren Absorptionen $A_1$, $A_2$, $A_3$ der Glasplatten erfüllt werden, ist eine vollständig Gebrauchsfähigkeit ermöglicht. Die Bedingung (2) ist dabei nicht auf wärmedämmende Verglasungselemente bestehend aus den drei Glasplatten beschränkt, sondern umfasst auch Verglasungselemente mit mehr als drei Glasplatten.

Die Ergebnisse des Erfinders waren nicht zu erwarten und sind überraschend, weil eine Abhängigkeit der Gebrauchseigenschaften, einschließlich der Stabilität und Lebensdauer des Verglasungselements von den solaren Absorptionen der einzelnen Glasplatten entsprechend den genannten Bedingungen von konventionellen Isoliergläser oder Vakuum-Isoliergläser nicht bekannt ist. Überraschenderweise hat sich insbesondere gezeigt, dass es zur Lösung der genannten Aufgabe nicht auf Einzelheiten zur Ausbildung der Abstandhalter (Material, Form, Größe, Art der Aufbringung) und der Vakuum-Randabdichtung (Material, Geometrie) ankommt. Vielmehr ist die jeweilige separate Betrachtung der einzelnen Werte der solaren Absorption $A_1$ der einzelnen Glasplatten im gesamten Spektralbereich von ca. 280 nm bis 2500 nm zur Lösung der Aufgabenstellung primär maßgebend.

Der Erfinder hat festgestellt, dass gerade durch die genannten Bedingungen (1) und (2) ermöglicht wird, mechanische Belastungen des gesamten Verglasungselements oder Bauelements zu minimieren, so dass Beschädigungen und schließlich ein Versagen vermieden werden. Bei der Realisierung insbesondere der genannten Bedingungen (1) und (2) kommt zu einer Überlagerung von verschiedenen Kräftekomponenten (Scherkräfte, Druck- und Zugkräfte) derart, dass die für die Gebrauchsfähigkeit maßgebliche resultierende Kraft reduziert wird und ein für eine Beschädigung bzw. Zerstörung entscheidender, kritischer Punkt nicht erreicht wird.

Die Erfindung ist von großem praktischen Vorteil, weil die Gebrauchsfähigkeit und somit die vollständige Funktionalität des erfindungsgemäßen wärmedämmenden Verglasungselementes für die verschiedensten Größen und Geometrien nun auf einfache Regeln und Handlungsvorschriften zurückgeführt werden kann. Dem Anwender steht damit ein gut handhabbares Werkzeug zur Verfügung, ein Verglasungselement an die Anforderungen einer konkreten Anwendung anzupassen.

Mit dem Begriff "Verglasungselement" wird allgemein eine Fensterstruktur bezeichnet, die dazu eingerichtet ist, in eine Wand, z. B. eines Bauwerks, eines Transportmittels oder eines Gehäuses (Behälters) oder eines technischen Apparats eingebaut zu werden. Das Verglasungselement weist eine Außenseite und eine Innenseite auf, d. h. das Verglasungselement ist dazu eingerichtet, mit einer bestimmten Orientierung in die Wand oder einen Apparat eingebaut zu werden. Vorzugsweise ist das Verglasungselement dazu eingerichtet, dass die Außenseite zu einem angrenzenden Raum mit einer geringeren Temperatur als die Innenseite weist. Die Außenseite des Verglasungselements weist z. B. zu einer Umgebung der Wand, während die Innenseite zu einem Innenraum weist, der von der Wand eingeschlossen ist. Typischerweise ist die Temperatur in der Umgebung niedriger als in dem Innenraum. Bei Verwendung des Verglasungselements in einem Apparat können die Temperaturen umgekehrt sein, wie z. B. in einem Kühlapparat, wobei in diesem Fall die als Außenseite bezeichnete Seite zum Inneren des Apparats weist.

Das erfindungsgemäße Verglasungselement weist vorzugsweise einen Wärmedämmwert (U-Wert) auf, der kleiner oder gleich 0,8 W/(m$^2$K), bevorzugt kleiner oder gleich 0, 6 W/(m$^2$K) ist. Der Erfinder hat festgestellt, dass gerade bei diesen niedrigen U-Werten die verbesserte Brauchbarkeit des erfindungsgemäßen Verglasungselements besonders ausgeprägt ist, wie es insbesondere von den herkömmlichen Vakuum-Isoliergläsern nicht bekannt ist. Der Begriff "Glasplatte" bezeichnet hier allgemein ein scheibenförmiges Strukturelement aus einem transparenten, amorphen, nichtkristallinen Feststoff. Das erfindungsgemäße Verglasungselement kann aus ebenen oder gekrümmten Glasplatten zusammengesetzt sein. Die Glasplatten bestehen vorzugsweise aus ungehärteten oder gehärteten Materialien, die Kalk-Natron-Glas, alkaliarme oder -freie Silikatgläser, kristallisierte oder teilkristallisierte Gläser oder Kombinationen daraus umfassen. Bei Verwendung von gehärteten Glasplatten ist das Material besonders bevorzugt so gewählt, dass auf mindestens einer Glasoberfläche eine Oberflächendruckspannung von mindestens 75 MPa gegeben ist.

Vorteilhafterweise bestehen verschiedene Möglichkeiten, die niedrig emittierende Beschichtung auf mindestens einer der inneren Oberflächen der Glasplatten anzubringen. Beispielsweise kann genau eine einzige niedrig emittierende Beschichtung vorgesehen sein, die auf einer der inneren Oberflächen angeordnet ist, die zu einem Zwischenraum weist, der zwischen der ersten nach außen gerichteten Glasplatte und der zu dieser benachbarten Glasplatte gebildet ist. Alternativ können genau zwei niedrig emittierende Beschichtungen vorgesehen sein, von denen eine Beschichtung auf der inneren Oberfläche der ersten, nach außen gerichteten Glasplatte und eine zweite Beschichtung auf einer anderen inneren Oberfläche des Verglasungselements, besonders bevorzugt auf der inneren Oberfläche der zweiten, nach innen gerichteten Glasplatte angeordnet ist. Des Weiteren können genau drei niedrig emittierende Beschichtungen vorgesehen sein, wobei vorzugsweise die innere Glasplatte auf der Oberfläche unbeschichtet ist, die zu der ersten, nach außen gerichteten Glasplatte weist. Die genannten Varianten können Vorteile in Abhängigkeit von den konkreten Anwendungen des Verglasungselements insbesondere mit Blick auf die Vermeidung thermischer Spannungen haben.

Die niedrig emittierende Beschichtung umfasst mindestens eine der Komponenten, die silberhaltige Schichtpakete, semitransparente Metalle, leitfähige Oxide oder gleichwertige Materialien (Materialien, die eine entsprechende niedrige Emissivität aufweisen) umfassen. Es können auch Gemische aus diesen Strukturen verwendet werden. Vorteilhafterweise wird das optische Erscheinungsbild des Verglasungselements bei Verwendung dieser Materialien so wenig geändert, dass es praktisch nicht wahrnehmbar ist.

Weitere Vorteile der Erfindung werden erzielt, wenn eines oder mehrere der folgenden Merkmale realisiert werden. Vorzugsweise weisen die ersten und zweiten Glasplatten eine Dicke ≤ 10 mm, besonders bevorzugt ≤ 6 mm auf. Die Dicke der innen angeordneten Glasplatte zwischen den ersten und zweiten Glasplatten ist vorzugsweise ≤ 6 mm gewählt. Besonders bevorzugt ist die Dicke der innen angeordneten Glasplatte ≤ 3 mm. Vorteile in Bezug auf das Gewicht des Verglasungselements und dessen Handhabung haben sich speziell bei einer Dicke der mindestens einen, innen angeordneten Glasplatte ergeben, die ≤ 1,8 mm gewählt ist.

Weitere vorteilhafte erfindungsgemäße Merkmale und Einzelheiten werden anhand der folgenden Beschreibung der erfindungsgemäßen Ausführungsbeispiele unter Bezugnahme auf die im Anhang befindlichen Figuren näher erläutert. Es zeigen:

Figuren 1A und 1B:  schematische Schnittansichten zur Illustration von Ausführungsformen erfindungsgemäßer Verglasungselemente;

Figuren 2A und 2B:  Detailansichten von Eckbereichen erfindungsgemäß verwendeter Glasplatten;

Figur 3:  eine schematische Schnittansicht einer Prüfkammer zur Prüfung erfindungsgemäßer Verglasungselemente;

Figur 4:  eine schematische Schnittansicht zur Illustration einer bevorzugten Anordnung erfindungsgemäß verwendeter Abstandshalter;

Figuren 5A bis 5F:  schematische Schnittansichten zur Illustration bevorzugter Anordnungen erfindungsgemäß verwendeter Randabdichtungen;

Figur 6:  eine schematische Schnittansicht zur Illustration des Ausgleichs von Unebenheiten einer Glasplatte in einem erfindungsgemäßen Verglasungselement;

Figuren 7A bis 7E:  schematische Schnittansichten zur Illustration eines Verfahrens zur Herstellung des erfindungsgemäßen Verglasungselements;

Figur 8:  schematische Schnittansichten von Ausführungsformen des erfindungsgemäßen Bauelements; und

Figuren 9 und 10:  weitere Einzelheiten bevorzugter Ausführungsformen erfindungsgemäßer Bauelemente.

Verfahren zur Herstellung der erfindungsgemäßen Verglasungselemente

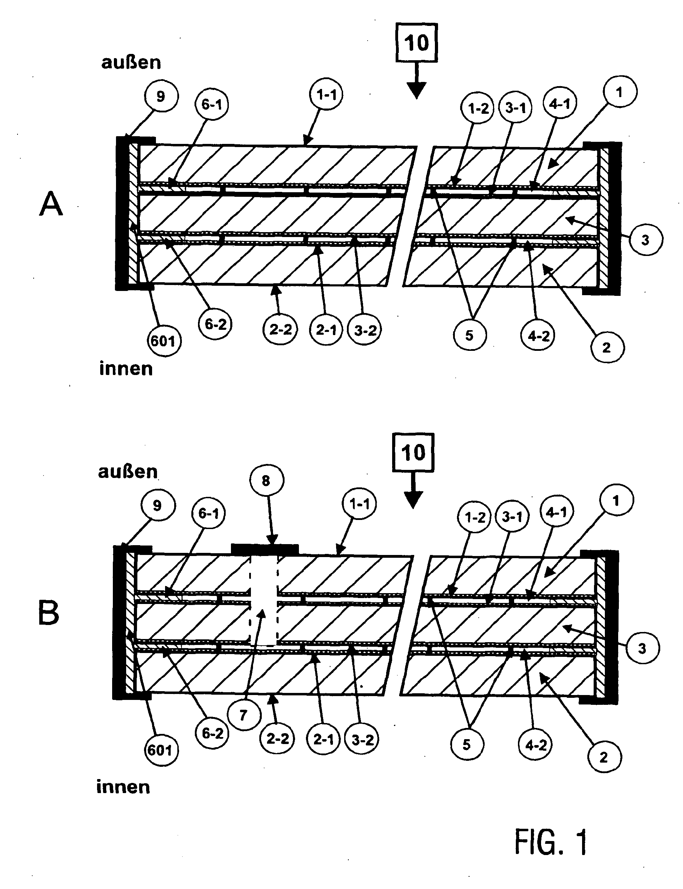

In den Figuren 1A und 1B sind Ausführungsformen des erfindungsgemäßen Verglasungselementes 10 in schematischer Schnittansicht dargestellt (Teildarstellung). Das erfindungsgemäße wärmedämmende Verglasungselement 10 umfasst eine mindestens annähernd parallele Anordnung von mindestens einer ersten, nach außen weisenden Glasplatte 1, einer zweiten, nach innen weisenden Glasplatte 2 und einer dritten, dazwischen angeordneten Glasplatte 3, wobei die Glasplatten 1, 2, 3 annähernd gleich groß sind.

Die mechanische Festigkeit des Plattenmaterials ist vorzugsweise mindestens so gewählt, dass einem äußeren Druck, der mit einer Last von ca. 10 Tonnen pro Quadratmeter oder größer wirkt, standgehalten werden kann. Vorteilhaft ist es dabei, wenn für die Glasplatten 1, 2, 3 Materialien mit möglichst geringen thermischen Ausdehnungskoeffizienten, z. B. kleiner zirka $\leq 50\cdot10^{-6}\cdot K^{-1}$ verwendet werden. Es können dabei verschiedene mindestens teilweise durchsichtige Materialien wie zum Beispiel Glas, glasartige Materialien, harte und temperaturstabile Kunststoffe, Komposit- bzw. Verbundwerkstoffe oder gleichwertige Stoffe oder Kombinationen zum Einsatz gelangen. Die weitere Beschreibung konzentriert sich exemplarisch auf die Verwendung von Glas, jedoch ist das erfindungsgemäße wärmedämmende Verglasungselement nicht auf diese Fälle beschränkt.

Die Dicke der Glasplatten 1, 2, 3 hängt von der Art der konkreten Verwendung und den sich daraus ableitbaren praktischen Erfordernissen ab. Damit die Gesamtdicke und somit auch das Gewicht des Bauteiles möglichst gering sind, besitzen die Glasplatten 1, 2 in Abhängigkeit von ihrer konkreten Verwendung und ihrer geometrischen Abmessungen eine Dicke von typischerweise kleiner oder gleich 10 mm. Von besonderem Vorteil ist, wenn die zwischen den Glasplatten 1, 2 angeordnete Glasplatte 3 mit einer geringeren Dicke von vorzugsweise höchstens 6 mm versehen ist. Wenn jedoch in der Praxis Bedarf besteht, dass aus statischen Gründen und/oder zur Schallreduzierung oder anderen Gründen dickere Glasplatten verwendet werden, so ist auch dies mit der Erfindung realisierbar.

Die Glasplatten 1, 2, 3 können aus einem normalen Einzelglas bestehen, das auch farbig getönt, mit funktionellen Beschichtungen für den Wärmeschutz, für den Sonnenschutz, für die Reflexionserhöhung bzw. -minderung, für die Regulierung bzw. Steuerung des Licht- bzw. Strahlungsdurchganges usw. oder auch Kombinationen daraus versehen, bedruckt und/oder bemalt und/oder sandgestrahlt usw. sein kann. Es ist möglich, dass die Glasplatten jeweils aus mehreren derartigen Einzelgläsern zusammengesetzt sind, wobei das Zusammenfügen durch ein dem Fachmann bekanntes Verfahren, wie zum Beispiel Folien- oder Gießharzverbundsysteme, Verklebungen oder dergleichen, erfolgen kann. Es sind zusätzlich auch weitere Kombinationen der Einzelgläser mit zum Beispiel Kunststoffen, Metallen, mineralischen Fasern und/oder Geweben oder solche Materialien enthaltende Stoffe und dergleichen, möglich.

In den Räumen 4-1, 4-2 zwischen den Glasplatten 1, 2, 3 sind Abstandhalter 5 über die gesamte Fläche hinweg angeordnet. Die Anzahl, die Größe, die Form, das einzusetzende Material und die Verteilung der Abstandhalter sowie auch die Abstände der Glasplatten zueinander sind vom Anwender so festzulegen; dass das Verglasungssystem eine für die praktische Nutzung ausreichende Festigkeit hat, die Glasplatten bei Einwirkung der Druckkräfte und sonstiger mechanischer und/oder thermischer Belastungen nicht aneinander stoßen, die Glasoberflächen nicht verletzt bzw. zerstört werden und potentielle Kältebrücken minimiert werden. Es wird auch berücksichtigt, dass die Abstandhalter 5 einen ästhetisch ansprechenden Eindruck ergeben. Dabei gilt es, die Abstandhalter 5 möglichst so zu gestalten, dass die von ihnen beanspruchten Positionen mit dem bloßen Auge kaum sichtbar sind sowie hinsichtlich ihres Reflexion und ihrer Farbe für den Anwender nicht störend wirken.

Die flächige Anordnung der Abstandhalter 5 erfolgt standardmäßig ähnlich einem gleichmäßigen Punktraster mit einem Abstand der Halter zueinander von typischerweise 20 mm bis rd. 50 mm. Die Anordnung der Abstandhalter muss dabei nicht unbedingt gleichmäßig erfolgen. Da die Druckbelastung auf eine vierseitig gelagerte Glaskonstruktion nicht gleichmäßig über die gesamte Fläche hinweg verteilt ist, lassen sich die Abstandhalter in den Bereichen höherer mechanischer Beanspruchung (insbesondere in den Kantenbereichen oder in den Diagonalen) dichter zueinander anordnen, in den Bereichen geringerer Belastungen entsprechend weniger dicht. Auf diese Weise lässt sich die Gesamtanzahl der Abstandhalter reduzieren oder aber auch die hoch beanspruchten Bereiche gezielt verstärken, wodurch sich unter anderem auch eine verbesserte Wärmeisolation und Lichtdurchlässigkeit sowie auch eine bessere Ästhetik des Bauteiles erzielen lassen.

Bei Verwendung von ungehärtetem Standard-Floatglas (Kalk-Natron-Glas) sind Abstände der einzelnen Abstandhalter 5 zueinander - je nach deren Durchmesser und konkreten Geometrie - von zirka 15 mm bis zirka 40 mm geeignet. Von besonderem Vorteil ist die Verwendung von Glasplatten aus an der Oberfläche gehärtetem Glas, wodurch sich der Abstand auf Werte von mindestens zirka 60 mm vergrößern lässt. Geeignet sind gehärtete Oberflächen mit einer Oberflächendruckspannung von vorzugsweise mindestens 75 MPa. Solche Gläser lassen sich mit aus dem Stand der Technik bekannte Verfahren, wie zum Beispiel durch das thermische (thermisch vorgespanntes oder teilvorgespanntes Glas) oder das chemische Härten (Ionenaustausch an der Glasoberfläche bis zu einer Gesamttiefe von ca. 150 $\mu$m), erzeugen.

Alternativ lassen sich die Oberflächen der Gläser durch das Aufbringen von harten und/oder reibungsmindernden Beschichtungen auf den inneren Oberflächen 1-2, 3-1, 3-2 und/oder 2-1 in gewünschter Weise funktionalisieren. Derartige Beschichtungen auf Glas bestehen vorteilhafterweise aus transparenten bzw. semitransparenten harten Materialien wie Metalloxiden, - nitriden, -oxynitriden, -karbiden und -karbonitriden usw., kohlenstoff- bzw. siliziumhaltigen Verbindungen, anderen gleichwertigen Materialien oder Kombinationen aus diesen. Die Dicke derartiger Beschichtungen sollte dabei mindestens 0,1 $\mu$m betragen. Die Abscheidung von lichtabsorbierenden Metallen oder Metalllegierungen ist ebenfalls möglich, jedoch sind hier deutlich geringere Schichtdicken von weniger als zirka 20 nm vorzusehen, damit noch eine ausreichende Transparenz des Verglasungselementes gegeben ist.

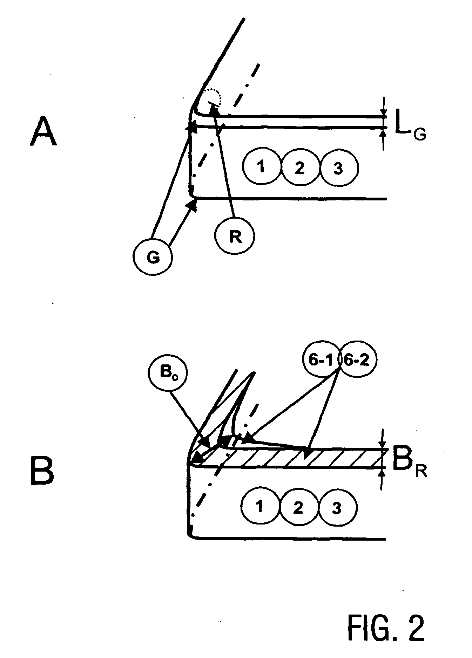

Die Herstellung der Glasplatten 1, 2, 3 erfolgt vorzugsweise derart, dass an den Kanten keine Risse, Ausmuschelungen oder andere sichtbare Beschädigungen auftreten. Durch die Verwendung von Laserschneidverfahren mit z. B. $CO_2$ oder Nd-YAG-Lasern lassen sich ausreichend gute Kantenqualitäten erzielen. Wie weiterhin festgestellt wurde, sind dabei insbesondere die Glasecken der Randabdichtungen ganz besonders anfällig. Sehr viele Schädigungen haben gerade hier ihren örtlichen Ursprung. Dies liegt vermutlich daran, dass sich gerade in diesen exponierten Bereiche besonders hohe lokale mechanische Spannungen ausbilden. Von ganz besonderem Vorteil ist, wenn die Ecken der Glasplatten 1, 2 und/oder 3 entsprechend Figur 2A zusätzlich abgerundet werden. Dies erfolgt zum Beispiel durch mechanisches Schleifen, wobei die Radien für die Rundungen R je nach Bauteilgröße mindestens zirka 5 mm, vorzugsweise größer oder gleich 10 mm betragen sollten. Eine weitere entscheidende Verbesserung der mechanischen Stabilität und Zuverlässigkeit der Verglasungselemente wird dadurch erreicht, dass in den Eckbereichen zusätzlich eine vorzugsweise beidseitige Gehrung G mit einer Ausdehnung $L_G$ von mindestens zirka 1 mm vorgesehen wird und etwa 35% der Glasdicken nicht überschreiten sollte.

Das Aufbringen der Abstandhalter 5 auf mindestens einer der dem Vakuum zugewandten Glasoberflächen kann in der Weise erfolgen, dass diese zum Beispiel adhäsiv gebondet werden. Dazu werden auf die entsprechende Glasplatte spezielle Bond/Klebmaterialien wie anorganische Siebdruckmaterialien, Glaslote, organische oder anorganische Komposite, Klebstoffe oder andere haftvermittelnde Materialien, lokal appliziert. Dies erfolgt mittels bekannter Vorrichtungen und Verfahren wie Siebdruckverfahren, konventionelle Print-Verfahren (Jet-Printing), Mikrodosierverfahren, Druckwalzen oder dergleichen. Danach werden die Abstandshalter mittels bekannter technischer Einrichtungen und Verfahren genau an diesen Stellen mechanisch fixiert. Zur Erreichung einer festen Klebverbindung zwischen den Abstandhaltern und den Glasoberflächen werden die Bondmaterialien zum Beispiel durch Bestrahlen (UVbis IR-Bereich, Mikrowellenstrahlung, konzentriertes Laserlicht usw.) und/oder durch eine definierte Wärmebehandlung oder andere bekannte Prozesse ausgehärtet. Auf die so vorgefertigte Glasplatte kann dann die nächste Glasplatte aufgelegt werden und die Abläufe solange wiederholt werden, bis das fertige Verglasungselement vorliegt.

In anderen Fällen kann sogar auf das Bonden der Abstandhalter verzichtet werden. Dabei wird die für die Montage erforderliche Ersthaftung der Abstandhalter auf der Glasplatte durch Verwendung von flüchtigen Verbindungen und Stoffen als Bondmittel oder durch Ausnutzung elektrostatischer Anziehungskräfte erreicht.

Zur Herstellung der Abstandhalter 5 eignen sich solche Materialien, die auf Druck und Scherung mechanisch gut beanspruchbar sind, zudem eine gute Temperaturstabilität und -belastbarkeit aufweisen sowie insbesondere auch keine Ausgasungen oder dergleichen zeigen, damit das zwischen den Glasplatten zu erzeugende Vakuum hergestellt und über einen langen Zeitraum aufrecht erhalten werden kann. Wie sich in den Versuchen gezeigt hat, sollte für die Abstandhalter vorzugsweise ein Material mit einer Druckbelastbarkeit von mindestens zirka 350 MPa bis zirka 1.000 MPa und darüber zum Einsatz gelangen. Auf Grund ihrer guten mechanischen Eigenschaften eignen sich verschiedene Metalle wie zum Beispiel Titan, Tantal, Molybdän, Wolfram, Kupfer, Platin, Chrom, Nickel, Eisen, Kobalt, Niob, Aluminium usw.. Aber auch deren Mischungen bzw. Legierungen (zum Beispiel verschiedene Stähle wie zum Beispiel Ni-Cr-Stähle, Inconel, Invar usw.) oder andere, diese Stoffe enthaltende Materialien lassen sich verwenden. Zur Vermeidung von zu großen Wärmeverlusten des Verglasungselementes ist es vorteilhaft, wenn solche metallhaltige Werkstoffe zur Verwendung gelangen, die neben einem geringen thermischen Ausdehnungskoeffizienten auch einen möglichst niedrige Wärmeleitfähigkeit besitzen, wie es zum Beispiel bei verschiedenen Handelstypen von Stainless Steel, Inconel, Invar oder auch bei mikro- bzw. nanoporösen metallhaltigen Werkstoffen usw. gegeben ist.

Um in ganz besonders vorteilhafter Weise die Wärmeverluste des Bauteiles noch weiter zu reduzieren, werden solche, aus dem Stand der Technik bekannte gut wärmeisolierende Materialien verwendet, die eine Wärmeleitfähigkeit von kleiner ca. 25 W/(m·K), vorzugsweise kleiner 5 W/(m·K) besitzen. Dies sind solche mit Druck beaufschlagbare Materialien wie Karbide, Nitride, Karbonitride, Oxide (wie zum Beispiel Aluminiumoxid oder Zirkonoxid), Oxynitride, als Keramik oder Porzellan oder Emaille bekannte Stoffe, anorganische und/oder organische Kompositwerkstoffe, Verbundwerkstoffe, Sol-Gel-Verbindungen, Glaslote, Glas oder andere glasartige Stoffe, andere gleichwertige Werkstoffe oder diese Stoffe enthaltende Materialien oder daraus aufgebaute Konstruktionen. Auch vakuumtaugliche feste Klebstoffe, die vorzugsweise mindestens eine aus der Gruppe von Materialien ausgewählte Substanz, die Acrylate, Cyanoacrylate, Harze, Epoxysysteme, Polyurethane, Silane und dergleichen umfasst, lassen sich verwenden. Auf die Oberflächen der Abstandhalter 5 lassen sich nach den bekannten Verfahren zusätzliche Beschichtungen zum Zwecke einer Reflexionsminderung, einer Farbgebung, der Einstellung einer definierten elektrischen Leitfähigkeit, der Reibungsminderung, Erhöhung der Oberflächenhärte und so weiter applizieren. Es ist auch vorteilhaft, wenn die für die Abstandhalter 5 verwendeten Materialien gleich in Form von Flüssigkeiten, Pasten, klebrigen Gemischen oder in ähnlicher Weise bereitgestellt werden und so ohne aufwändiges Positionieren gleich auf die Glasoberflächen - mittels der bekannten Verfahren wie zum Beispiel Druck-, Jet- oder ähnlichen Verfahren - aufgebracht werden können. Aber auch solche bekannten Abstandhalterkonstruktionen, die - ähnlich einer Sandwichstruktur - aus einem druckfesten Kern (Metalle, Legierungen, Keramiken usw.) mit zusätzlichen funktionellen Beschichtungen an den Oberflächen aufgebaut sind oder andere mehrlagige Konstruktionen, wodurch die Aufnahme der äußeren Druck- und vor allem der tangential wirkenden Scherkräfte verbessert wird, lassen sich beim erfindungsgemäßen Verglasungselement einsetzen.

Zur Aufrechterhaltung des definierten Abstandes zwischen den Glasplatten 1, 2, 3 lassen sich aber auch Zwischenlagen einbringen, die ganz- oder teilflächig oder auch partiell im Zwischenraum 4 angeordnet sind. Als gut geeignet erweisen sich dünne Glasfliese, bekannte mechanisch feste mikroporöse Materialien oder dergleichen. Jedoch ließen sich auf Grund der deutlich höheren Wärmeleitfähigkeit zwischen den einzelnen Glasplatten keine sehr guten U-Werte erzielen.

Grundsätzlich sind der Formgebung der Abstandhalter 5 nahezu keine Grenzen gesetzt. Neben zylindrischen Formen, lassen sich rhomboedrische, rechteckige, dreieckige, sphärische, ringförmige, gebogene, ovale, kugel- oder perlenförmige, trapez- oder pyramidenförmige, drahtförmige (geformt oder nicht geformt) oder abgewandelte oder ähnliche Geometrien, Querschnitte usw. zum Einsatz bringen. Entscheidend ist, dass stets die mechanische Stabilität und Festigkeit des gesamten Verglasungselementes gewährleistet ist.

Als besonders gut herzustellen und einfach zu handhaben erwiesen sich kugelförmige oder auch scheiben-, ring- oder plattenförmige Glaskörper mit einer typischen geometrischen Abmessung (Durchmesser). Auf Grund der optimalen optischen Anpassung zwischen den Glasplatten 1, 2, 3 und den Abstandhaltern 5 lassen sich die Abstandhalter nun auch etwas größer auslegen, ohne dass dies zu merklichen Beeinträchtigungen für den Beobachter führt. Es lassen sich nahezu alle am Markt erhältlichen Glasmaterialien wie Kalk-Natron-Glas, alkalifreie oder alkaliarme Silikatgläser, Quarzglas usw. gut verwenden. Bei Verwendung von gleichen oder ähnlichen Glasmaterialien für die Abstandhalter 5 und die Glasplatten 1, 2, 3 lässt sich die Verbindung zwischen Abstandhalter und Glasplatten in vorteilhafter Weise durch das Diffusionsbonden herstellen. Als vorteilhaft hat sich herausgestellt, wenn die Oberflächen der aus Glas bestehenden Abstandhalter noch zusätzlich durch die aus dem Stand der Technik bekannten thermischen oder chemischen Prozessen gehärtet sind oder mit harten und/oder reibungsmindernden Beschichtungen versehen sind. Die reibungsmindernden Beschichtungen sollten dabei vorzugsweise Gleitreibungskoeffizienten von zirka kleiner oder gleich 0,3 aufweisen. Neben Teflon eignen sich auch aus der Technik bekannte kohlenstoff-, silizium- sowie fluorhaltige Verbindungen oder Gemische daraus mit einer Beschichtungsstärke von mindestens 0,1 $\mu$m, bis zirka 5 $\mu$m oder auch metallische Schichten.

Es ist aber auch möglich, so genanntes oberflächenstrukturiertes Glas zu verwenden. Dabei wird schon während der Glasherstellung durch zum Beispiel Walz- und/oder Prägeverfahren die noch im erweichten oder teilweise erweichten Zustand befindliche Glasoberfläche mit kleineren Strukturen bzw. Erhebungen versehen. Diese durchaus mit einem Design versehenen Strukturen übernehmen dann letztendlich die Funktion der Abstandhalter 5.

Die Abstandhalter 5 in Figur 1 haben exemplarisch eine zylindrische Form. Sie besitzen einen Durchmesser von kleiner 1,5 mm, vorzugsweise kleiner oder gleich 1 mm und eine Höhe zwischen zirka 0,1 mm und 1,5 mm, vorzugsweise zwischen 0,2 mm und 1 mm.

Im folgenden Schritt werden die etwa gleich großen Glasplatten 1, 2, 3 bündig oder auch etwas versetzt aufeinander gelegt und die Randabdichtungen 6-1, 6-2 hergestellt. Zur Verbesserung der Vakuumdichtheit können die Abdichtungen 6-1, 6-2 entweder vollständig oder nur partiell auch über die Glaskanten ausgedehnt werden (siehe 601 in Figur 1). Die Herstellung des Randverbundes 6-1, 6-2, 601 erfolgt durch Applizieren des Dichtungsmaterials in Form von vorgefertigten Pasten oder Suspensionen, Pulvern, Granulaten, Drähten, Bändern bzw. Filmen oder dergleichen, wobei für 6-1, 6-2, 601 auch unterschiedliche Materialien verwendet werden können.

Für die mechanische Versteifung der Randabdichtungen 6-1, 6-2 ist eine Mindestbreite von zirka 3 mm, besonders bevorzugt mindestens 5 mm umlaufend vorzusehen. Auf Grund der besonders hohen mechanischen Beanspruchungen in den Glasecken werden in bevorzugter Weise diese lokalen Bereiche mechanisch verstärkt, wie es in Figur 2B schematisiert dargestellt ist. Dazu wird in diesen Bereichen zusätzliches Dichtungsmaterial eingebracht. Vorzugsweise beträgt die Breite $B_D$ der in den Diagonalen abgerundet verlaufenden Randabdichtung mindestens 8 mm. Als eine für die Praxis gut geeignete Regel gilt, dass die Breite der Randabdichtung $B_D$ in der Eckdiagonale mindestens um den Faktor 1,5 bis 2,0 breiter ausgelegt ist als die jeweiligen an den Kanten gleichmäßig umlaufenden Abdichtungen 6-1, 6-2 mit der Breite $B_R$.

Zur Herstellung des Randverbundes können die dem Fachmann aus der Vakuumtechnik, der Vakuum-Röhrentechnik und der Lampenherstellung an sich bekannten Verfahren verwendet werden. Es lassen sich insbesondere Glas-Metall-Bondsysteme oder Glaslote (wie Metalle, Metallverbindungen bzw. -legierungen mit zum Beispiel mindestens einen der Bestandteile Zinn, Blei, Indium, Kupfer, Zinn, Zink und/oder Silber usw. enthaltend), bei geringen Temperaturen erweichende Gläser oder ähnliche glasartige Werkstoffe, Glasfritten usw. verwenden. Aber auch anorganische und/oder organische Kompositmaterialien, Sol-Gel-Verbindungen, organische Substanzen enthaltende Klebstoffe oder auch Polymersysteme (mit oder ohne Zusätze) oder dergleichen mit geringer Permeation lassen sich benutzen. Der erfindungsgemäß verwendete Klebstoff enthält vorzugsweise mindestens eine aus der Gruppe von Materialien ausgewählte Substanz, die Acrylate, Cyanoacrylate, Harze, Epoxysysteme, Polyurethane, Silane und dergleichen umfasst. Eine mitunter notwendige Aushärtung, ein Aufschmelzen, ein Polymerisieren usw. des Dichtungsmaterials geschieht entweder durch integrale oder wellenlängenselektive Bestrahlung (UV- bis IR-Bereich, Mikrowellenstrahlung, konzentriertes Laserlicht usw.) und/oder durch eine definierte Wärmebehandlung (zum Beispiel konventionelles oder induktives Heizen, Widerstandsheizen bei elektrisch leitfähigen Stoffen usw.) oder Kombinationen daraus. Für eine kostengünstige Herstellung der Verglasungselemente haben sich solche Dichtungsmaterialien als vorteilhaft herausgestellt, bei denen das Zusammenfügen schon bei niedrigen Temperaturen unterhalb von ca. 350°C, vorzugsweise kleiner 250°C vorgenommen werden kann. Das Abdichten der Glasplatten 1, 2, 3 im Randbereich kann dabei sowohl unter Atmosphären- als auch unter Vakuumbedingungen durchgeführt werden.

Zur Minimierung der Wärmeverluste durch Wärmeleitung und Wärmekonvektion wird in den Räumen 4-1, 4-2 ein gegenüber dem äußeren Atmosphärendruck $p_0$ verringerter Druck $p_v$ (Vakuum) zwischen zirka $10^{-1}$ bis $10^{-3}$ Pa oder niedriger erzeugt. Die Erzeugung des Vakuums lässt sich in einfacher Weise über eine aufgesetzte Vakuumerzeugungsapparatur durchführen. Dabei werden die Restgase und das Wasser zwischen den Glasplatten 1, 2, 3 über die separate Öffnung bzw. Bohrung 7 abgesaugt (Figur 1B). Es ist von Vorteil, wenn bei der Erzeugung des Vakuums eine gegenüber der Raumtemperatur genügend erhöhte Temperatur von mindestens 60°C eingestellt wird, um eine bessere Desorption des Restwassers in den Zwischenräumen 4-1, 4-2 zu erreichen. Um die Evakuierungszeit zu minimieren, weist die Öffnung 7 einen Mindestdurchmesser von zirka 2 mm auf. Nach dem Evakuieren wird die Öffnung 7 durch eine Abdeckung 8 vakuumdicht verschlossen. Zur Vakuumerzeugung lässt sich in die Öffnung 7 auch ein Rohr einbringen, dass zunächst vor dem Evakuieren an der Oberseite der Glasplatte 2 vakuumdicht verklebt oder verlötet wird. Nach Erreichen des erforderlichen Enddruckes lässt sich dieses Rohr dann am oberen Ende thermisch verschmelzen oder durch andere bekannte Techniken vakuumdicht verschließen. Durch das Aufbringen einer weiteren Kappe oder dergleichen kann noch ein zusätzlicher Schutz gegen mechanische Schädigungen beim Transport oder bei der Montage des Verglasungselementes erreicht werden. Von ganz besonderem Vorteil ist es, wenn die Herstellung des endgültigen Randverbundes 6-1, 6-2, 601 direkt im Vakuum erfolgt. Das Evakuieren wird dabei durch eine noch zu verschließende Öffnung mit einer ausreichenden Abmessung im Randverbund vollzogen, wobei auch hier ein Rohr oder dergleichen zusätzlich eingebracht werden kann. Das Vakuum in den Zwischenräumen 4-1, 4-2 lässt sich durch das Einbringen von bekannten Gettermaterialien wie zum Beispiel unterstöchiometrischem Titanoxid usw. zwischen die Glasplatten 1, 2, 3 und/oder auch in den Randbereich und/oder in Form von Beschichtungen auf den inneren Oberflächen 1-2, 3-1, 3-2, 2-1 weiter verbessern.

Zum mechanischen Schutz der Randabdichtung oder der Glaskanten vor Beschädigungen bei der praktischen Verwendung des Verglasungselementes kann am Rand eine zusätzliche Ummantelung 9, die auch als Teil der Randabdichtung verwendet werden kann, mit einem Kantenüberstand von zirka 5 mm bis 30 mm angebracht werden.

Zur Vermeidung der Wärmeverluste durch Wärmestrahlung ist es unbedingt erforderlich, dass mindestens eine der inneren Oberflächen 1-2, 3-1, 3-2, 2-1 des erfindungsgemäßen wärmedämmenden Verglasungselementes mit einer Wärmeschutzbeschichtung versehen ist. Hierzu eignen sich ganz besonders lichtdurchlässige Beschichtungen, die eine Emissivität von mindestens kleiner oder gleich 0,16, vorzugsweise kleiner oder gleich 0,09, ganz besonders bevorzugt kleiner oder gleich zirka 0,05 besitzen. Niedrig emittierende Beschichtungen sind an sich aus der Praxis bekannt. Die Aufbringung erfolgt mit den an sich bekannten Verfahren.

Die Palette der funktionellen Beschichtungen an den Innenflächen 1-2, 3-1, 3-2, 2-1 lässt sich durch die Verwendung von den so genannten kombinierten Schichten, die gleichzeitig Wärme- und Sonnenschutzeigenschaften aufweisen, und/oder Sonnenschutzschichten und/oder farbigen Schichten und/oder lichtabsorbierenden Schichten und/ oder Hartstoffschichten usw. nahezu beliebig kombinieren. Durch die zusätzliche Modifizierung der außen liegenden Oberflächen 1-1, 2-2 zum Beispiel durch Beschichtungen mit wasser- und/oder schmutzabweisenden Wirkungen, für die Strahlungsregulierung (Sonnenschutz, Reflektionsminderung, Farbgebung usw.), für Design und Ästhetik und dergleichen wird eine noch höhere Funktionalität des Verglasungselementes erreicht.

Verfahren zur Bestimmung der solaren Absorptionen und zur Prüfung der Gebrauchsfähigkeit des erfindungsgemäßen Verglasungselementes

Die solaren Absorptionen $A_i$ entsprechend den im erfindungsgemäßen Verglasungselement tatsächlich an jeder der Glasplatten 1, 2, 3 real vorhandenen solaren Absorption und werden im Wellenlängenbereich zwischen zirka 280 nm bis 2500 nm entsprechend der Norm (ISO/DIS 9050, DIN EN 410, ASTM E-424) bestimmt. Die Summe aus diesen solaren Absorptionen $A_i$ ergibt die totale (gesamte) Absorption des wärmedämmenden Verglasungselementes $A_{tot}$, die zwar in einfacher Weise durch spektrale Messungen des kompletten Verglasungselementes 10 mittels herkömmlicher Spektralphotometer bestimmt werden kann, jedoch letztendlich keine spezifische Aussage über die einzelnen solaren Absorptionen $A_i$ erlaubt. Weiterhin ist zu berücksichtigen, dass auf Grund der "optischen Kopplung" der einzelnen Glasplatten 1, 2, 3 innerhalb des Verglasungselementes (siehe zum Beispiel durch Mehrfachreflexionen und -absorptionen usw.) die solaren Absorptionen $A_i$ nicht identisch den an den jeweiligen Einzelgläsern separat gemessenen Absorptionswerten $A_{i,0}$ sind.

Die direkte Messung der Absorptionswerte $A_i$ durch die bekannten optischen Meßverfahren ist sehr aufwändig, weshalb die solaren Absorptionen $A_i$ rechnerisch ermittelt werden. Hierzu werden die Glasplatten 1, 2, 3 zunächst einzeln spektralphotometrisch vermessen und so die wellenlängenabhängigen Transmissions-, Reflexions- und Absorptionswerte im gesamten Spektralbereich zwischen zirka 280 nm bis 2500 nm bestimmt. Daran anschließend lassen sich unter Verwendung bekannter Verfahren und Methoden (siehe ISO/DIS 9050, DIN EN 410, ASTM E-424) die gewünschten solaren Absorptionswerte an jeder Position innerhalb des Verglasungselementes berechnen. Wie sich gezeigt hat, kann dabei der Einfluss der Abstandhalter im Rahmen der Messgenauigkeiten vollkommen vernachlässigt werden.

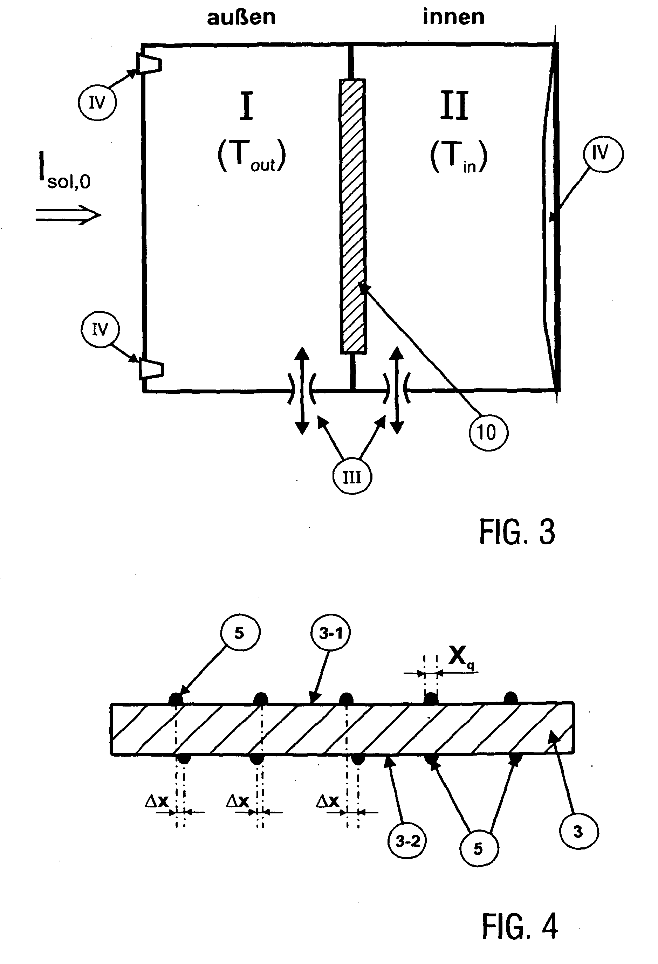

Die Messung der U-Werte der erfindungsgemäßen Verglasungselemente erfolgt mittels der bekannten Plattenmethode. Zur Prüfung der Gebrauchsfähigkeit und Funktionalität der Verglasungselemente 10 wird eine spezielle Apparatur entsprechend Figur 3 verwendet. Die Prüfkammer ist in zwei vollständig gegeneinander abgetrennte Raumbereiche I, II geteilt. Im Raum I werden die äußeren (siehe Außentemperatur $T_{out}$, solare Einstrahlung $I_{sol,0}$, Beschlag usw.) und im Raum II die inneren Klimabedingungen (siehe Innentemperatur $T_{in}$, Kondensationseffekte) eingestellt. Durch eine externe Beleuchtungseinrichtung werden die Verglasungselemente 10 mit einer an das Sonnenspektrum angepassten solaren Strahlung $I_{sol,0}$ beaufschlagt. Die Strahlungsintensität $I_{sol,0}$ ist im Bereich bis mindestens zirka 1200 W/m² variierbar. Es wurden folgende Prüfbedingungen verwendet:

a) Standard-Testbedingungen nach NFRC 100-2001:
Winterliche Bedingungen:
$T_{out}$ = -18 °C, $T_{in}$ = 21 °C, $I_{sol,0}$ = 0 W/m²
Sommerliche Bedingungen:
$T_{out}$ = 32 °C, $T_{in}$ = 24 °C, $I_{sol,0}$ = 783 W/m²
b) Gesteigerte Testbedingungen:
Winterliche Bedingungen:
$T_{out}$ = -25 °C, $T_{in}$ = 21 °C, $I_{sol,0}$ = 500 W/m²
Sommerliche Bedingungen:
$T_{out}$ = 40 °C, $T_{in}$ = 24 °C, $I_{sol,0}$ = 1200 W/m²
Durch die Öffnungen III können zusätzlich in die Räume I, II trockene oder angefeuchtete Luft ein- und ausgeströmt werden. Durch die Beregnungs- bzw. Befeuchtungseinrichtung IV lässt sich gleichzeitig der Einfluss des auf die äußere Glasplatte auftreffenden Regenwassers auf die Gebrauchsfähigkeit simulieren. Durch an den Glasplatten angebrachte Thermoelemente kann die Temperatur jeder einzelnen Glasplatte auch während der Prüfung gemessen werden.

Eine vollständige Gebrauchsfähigkeit der geprüften Verglasungselemente liegt dann vor, wenn die Prüflinge sämtliche Testbedingungen schadlos überstanden haben. Um einigermaßen gesicherte statistische Aussagen zu erhalten, werden jeweils mindestens fünf identische Prüflinge getestet. Das Prüfergebnis ist als positiv zu bewerten, wenn an mindestens 90% dieser Probekörper keinerlei Beschädigungen festgestellt werden.

Im Folgenden werden Einzelheiten bevorzugter Ausführungsbeispiele der Erfindung näher erläutert.

## Ausführungsbeispiel 1

Die in einer ersten Ausführung hergestellten Verglasungselemente weisen einen Aufbau entsprechend Figur 1 auf, wobei die inneren Oberflächen 1-2, 3-1, 3-2 oder 2-1 in dieser Variante mit nur einer einzigen niedrig emittierenden Schicht versehen sind. Die auf jeweils etwa 50 mm voneinander beabstandeten, aus Glas oder Keramik bestehenden Abstandhalter 5 sind als dünne Scheiben mit einem Durchmesser von zirka 0,5 mm und einer Höhe von etwa 0,5 mm ausgeführt. Die Verglasungselemente haben eine Größe zwischen zirka 0,8 m$^2$ und 5,1 m$^2$. Für die Glasplatten 1, 2, 3 werden erfindungsgemäß nur solche Materialien ausgewählt, bei denen die berechneten solaren Absorptionen die erfindungsgemäßen Bedingungen (1), (2) erfüllten. Dadurch ergaben sich sehr starke Einschränkungen hinsichtlich der verwendbaren Glastypen, Glasdicken, Farben und Designs sowie letztendlich auch hinsichtlich der Auswahl von geeigneten niedrig emittierenden Beschichtungen usw..

Unter den standardisierten Prüfbedingungen (NFRC 100-2001) werden für diese Ausführung bei einer Emissivität ε von 0,09 U-Werte in der Bauteilmitte von zirka 0,57 W/(m$^2$K) erreicht. Bei Verwendung einer Beschichtung mit einer Emissivität von 0,048 kann die Wärmedämmung auf U-Werte von zirka 0,46 W/(m$^2$K) verringert werden. Selbst bei einer Emissivität von nur 0,17 lassen sich noch gute U-Werte von etwa 0,8 W/(m$^2$K) einstellen.

Wie sich in den Untersuchungen gezeigt hat, wird für sämtliche entsprechend den Bedingungen (1), (2) konstruierten Verglasungselemente eine vollständige Gebrauchsfähigkeit und Funktionalität erhalten. Von besonderem Vorteil ist, wenn die niedrig emittierende Schicht dabei entweder auf der Oberfläche 1-2 oder 2-1 appliziert wird. Dadurch kann die Ausfallhäufigkeit des erfindungsgemäßen Verglasungselementes auf zirka 5% und sogar darunter reduziert werden. Eine ganz besonders gute Stabilität und somit Gebrauchsfähigkeit unter den verschiedensten Testbedingungen wurden für solche Verglasungselemente erhalten, bei denen die effektive solare Absorption $A_3$ der Glasplatte 3 durch Verwendung von zum Beispiel einfachem, weder beschichtetem noch gefärbtem Standard-Floatglas auf Werte kleiner oder gleich zirka 0,10 eingestellt wurde.

Mit diesen Ausführungen wird erreicht, dass der große Temperaturunterschied zwischen dem Außen- (-18°C) und dem Innenbereich (21°C) entsprechend der Standard-Prüfbedingungen teilweise kompensiert werden kann. Durch das Aufbringen der niedrig emittierenden Beschichtung auf den Oberflächenpositionen 1-2 oder 3-1 bzw. 3-2 oder 2-1 wird ein abgeschwächter Temperaturgradient "Glasplatte 1 / Glasplatte 3 / Glasplatte 2" von zirka "-17°C / 13°C / 18°C" bzw. "-17°C / -11°C / 18°C" erhalten. Die hier angegebenen Temperaturwerte sind nur als Illustration des grundsätzlichen Mechanismus zu verstehen, denn die exakten Werte unterliegen in Abhängigkeit von den konkreten Bedingungen gewissen Schwankungen. Von besonderem Vorteil haben sich die Varianten erwiesen, bei denen die Beschichtung auf die Oberflächen 1-2 oder 3-1 appliziert wurden, da hier die unerwünschten Kondensatbildungen an den Abstandhalterpositionen nahezu vollständig vermieden werden konnten.

## Ausführungsbeispiel 2

In einer weiteren Variante werden nunmehr insgesamt zwei niedrig emittierende Beschichtungen auf den Oberflächen 1-2, 3-1, 3-2, 2-1 vorgesehen. Diese Ausführung ist von ganz besonders großem Vorteil, weil sich die Gebrauchsfähigkeit des erfindungsgemäßen Verglasungselementes sehr bedeutend steigern lässt. Die Herstellung wie auch die Durchführung der Prüfungen und Messungen erfolgen identisch zu Ausführungsbeispiel 1. Auch bei dieser speziellen Ausführungsvariante kommt es darauf an, die Bedingungen für die solaren Absorptionen der Glasplatten 1, 2, 3 entsprechend der Beziehungen (1), (2) einzuhalten, denn nur dadurch konnten vollständig gebrauchsfähige wärmedämmende Verglasungselemente erhalten werden.

Als vorteilhaft hat sich erwiesen, dass sich mit dieser Variante die U-Werte (bei einer Emissivität von 0,048 sogar auf zirka 0,3 W/(m$^2$K) verringern lassen. Bevorzugt werden aus Sicht des optimalen Wärmeschutzes die niedrig emittierenden Beschichtungen auf den inneren Oberflächen in den Kombinationen (1-2 und 3-2) oder (1-2 und 2-1) oder (3-1 und 2-1) aufgebracht. Mit diesen Varianten werden nicht nur die sehr niedrigen U-Werte erreicht, sondern zusätzlich der hohe Temperaturunterschied zwischen außen (-18°C) und innen (21°C) noch besser abgestuft. Für die bevorzugten Kombinationen lassen sich zum Beispiel für die winterlichen Testbedingungen nahezu optimale Temperaturverläufe "Glas 1 / Glas 3 / Glas 2" von etwa "-17°C / 1,5°C / 19°C" erhalten. Dadurch ist es nun möglich, die für die Beschädigung bzw. Zerstörung maßgeblich verantwortlichen mechanischen Spannungen noch weiter abzubauen und erfindungsgemäße Verglasungselemente mit einer vollständigen Gebrauchsfähigkeit sogar bis zu Abmessungen von 2,80 m x 3,80 m und darüber bereitzustellen. Als ganz besonders vorteilhaft erweist sich die Kombination (1-2 und 2-1), da hier fast keine Ausfälle oder Beschädigungen festgestellt wurden.

Die Beschichtung der inneren Oberflächen in der Konstellation (1-2 und 3-1) führte zwar zu etwas schlechteren U-Werten, jedoch konnte bei dieser Variante im Vergleich zu den anderen Kombinationen sowohl eine noch etwas verbesserte Gebrauchsfähigkeit als auch ein verringertes Auftreten von Kondensationserscheinungen festgestellt werden.

**Ausführungsbeispiel 3**

Durch das Einbringen von nunmehr insgesamt drei niedrig emittierenden Beschichtungen auf den Oberflächen 1-2, 3-1, 3-2, 2-1 lässt sich eine weitere Ausgestaltungsform erhalten. Diese erlaubt es dem Grunde nach, wiederum verschiedene Anordnungen für die Beschichtungen auszuwählen. Wie sich jedoch gezeigt hat, führt die Implementierung einer weiteren Beschichtung nicht zu einer nennenswerten Verbesserung des U-Wertes. Nachteilig hat sich zudem erwiesen, dass bei dieser Ausführung im Vergleich zu den Ausführungsbeispielen 1, 2 mehr Beschädigungen und Ausfälle aufgetreten sind. Insbesondere kommt es bei der Beschichtung der Oberflächen in der Kombination (1-2 und 3-1 und 3-2) mit Schichten niedriger Emissivität sehr schnell zu Überhitzungen an der Glasplatte 3, so dass diese Konstellation für praktische Anwendungen wenig geeignet ist. Bei dieser Ausführung hat sich bei Vergleich der verschiedenen möglichen Kombinationen die Beschichtungsvariante (1-2 und 3-2 und 2-1) als am gebrauchsfähigsten erwiesen.

Wie sich gezeigt hat, sind die erfindungsgemäßen Merkmale nicht auf solche Verglasungselemente, die nur zwei oder drei Glasplatten enthalten, beschränkt. Vielmehr sind die Bedingungen (1), (2) für die solaren Absorptionen $A_i$ der einzelnen Glasplatten i uneingeschränkt für alle Erweiterungen anzuwenden. Als ganz besonders bevorzugt ist für aus mehr als drei Glasplatten bestehende Verglasungselemente, wenn die effektiven solaren Absorptionen der zwischen der nach außen und der nach innen angeordneten Glasplatten Werte von kleiner oder gleich 0,10 aufweisen.

**Ausführungsbeispiel 4**

Eine weitere Ausführung sieht vor, dass die Abstandhalter 5 erfindungsgemäß beidseitig fest auf die Glasplatte 3 aufgebracht werden. Diese Variante ist von ganz besonderem Vorteil, weil nunmehr keine feste bzw. starre Verbindung der Abstandhalter mit den Oberflächen der Glasplatten 1 und 2 nötig ist und sich dadurch vor allem auch das Bruchrisiko bei der praktischen Nutzung des Bauteiles, das gerade durch die mechanische Bewegungen und Deformationen der Glasplatten 1, 2 hervorgerufen wird, weitestgehend vermieden werden kann. In besonders vorteilhafter Weise wird das Aufbringen der Abstandhalter 5 auf der Glasplatte 3 in einem völlig separaten Verfahrensschritt und unabhängig von der eigentlichen Montage des Verglasungselementes durchgeführt. Es sind mit diesem Verfahren sogar Glasplatten 3 in Industriestandardgrößen von bis zu 3,21 x 6,00 m$^2$ und darüber verwendbar. Die beidseitig mit den Abstandhaltern 5 bestückten großformatigen Glasplatten 3 lassen sich nunmehr auf Vorrat produzieren, wie normales Floatglas in großen Mengen lagern, erst bei dem jeweiligen konkreten Bedarf auf die Originalgröße zurechtschneiden und letztendlich bei der Endmontage des erfindungsgemäßen Verglasungselementes wie eine einfache Zwischenlage handhaben. Dadurch ist es möglich geworden, die komplizierten Verfahrensschritte zu entflechten und die Herstellungskosten deutlich zu verringern.

In Figur 4 ist der seitliche Schnitt durch eine beidseitig mit Abstandhaltern bestückte Glasplatte 3 schematisch dargestellt. Das Applizieren der Abstandhalter geschieht auf der Basis der schon beschriebenen Verfahren. Von besonderem Vorteil ist, wenn die Abstandhalter durch Druck- oder Jet-Verfahren oder durch Transferfolien oder dergleichen aufgebracht werden, weil dadurch eine kostengünstige Massenproduktion gleich auf sehr großen Plattenabmessungen durchgeführt werden kann. Für die Abstandhalter lassen sich die Materialien entsprechend der vorherigen Beschreibung verwenden. Um eine besonders hohe mechanische Stabilität sowie auch gute Ästhetik zu erreichen, ist es notwendig, die auf den Oberflächen 3-1, 3-2 gegenüberliegend angebrachten Abstandhalter möglich genau zu positionieren. Die totalen Abweichungen $\Delta x$ entsprechend Figur 4 sollten vorzugsweise kleiner als das Doppelte des Abstandhalterquerschnittes $X_q$ sein.

Da die Glasplatte 3 überwiegend den von beiden Seiten nahezu identisch einwirkenden Druckbelastungen ausgesetzt wird, können sogar dünne Glasplatten bevorzugt mit Dicken von kleiner oder gleich als 3 mm, vorzugsweise mit Dicken zwischen zirka 1,8 mm und 0,5 mm verwendet werden. Die praktische Verwendung von Glasplatten 3 mit einer Dicke von weniger als zirka 1,8 mm ist deshalb von besonderem Vorteil, weil die Glasplatten nunmehr sogar flexibel verformbar sind und dadurch mögliche geometrische Ungleichmäßigkeiten, Welligkeiten und sonstige Toleranzen noch besser ausgleichen können. Andererseits sind solche dünnen Glasplatten 3 deutlich unempfindlicher gegenüber höheren Temperaturen und Temperaturdifferenzen, wodurch die Festigkeit sowie die Gebrauchseigenschaften des erfindungsgemäßen Verglasungselementes entscheidend verbessert werden. Für die Glasplatte 3 werden ungehärtete und gehärtete Kalk-Natron-Gläser benutzt. In ganz besonderer Weise eignen sich ungehärtete temperaturstabile Gläser wie zum Beispiel alkalifreie oder alkaliarme Silikatgläser oder dergleichen, weil dadurch die Temperaturempfindlichkeit des Verglasungselementes und das damit verbundene Bruchrisiko noch weiter verringert werden. Grundsätzlich ist es möglich, eine oder beide Oberflächen der Glasplatte 3 mit niedrig emittierenden Beschichtungen zu versehen. Jedoch kommt es bei der Produktion aufgrund des Handlings oftmals zu unakzeptablen Beschädigungen der Schichten und somit zu unerwünschten Qualitätseinbußen. Von ganz besonderem Vorteil ist, wenn die Glasplatte 3 unbeschichtet ausgeführt wird und die zur Erreichung der kleinen U-Werte erforderlichen Wärmedämmschichten auf den Oberflächen 1-2 und/oder 2-1 appliziert werden.

In ganz besonders vorteilhafter Weise lässt sich diese Ausführungsvariante für gebogene oder gekrümmte Bauteile nutzen, um die dort auftretenden herstellungsbedingten Toleranzen bei den Glasplatten 1, 2 besser auszugleichen. Bei der Verwendung von Gläsern mit Dicken von zirka kleiner oder gleich 1,8 mm in zylindrisch oder ähnlich gebogenen Verglasungselementen lassen sich die Glasplatten 3 sogar kalt verformen, wodurch das aufwändige und kostenintensive thermische Biegeverfahren entfallen kann.

**Ausführungsbeispiel 5**

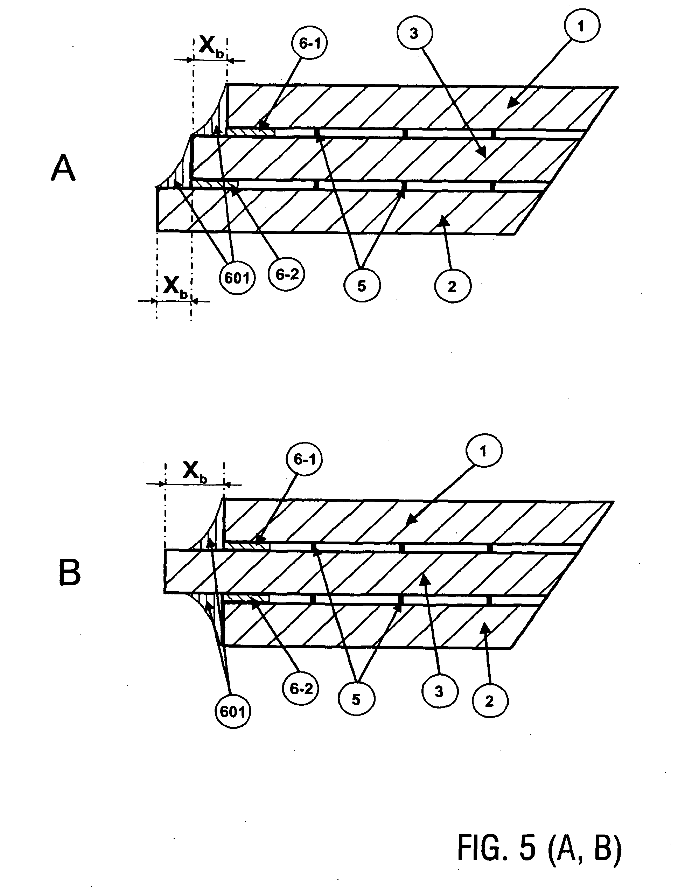

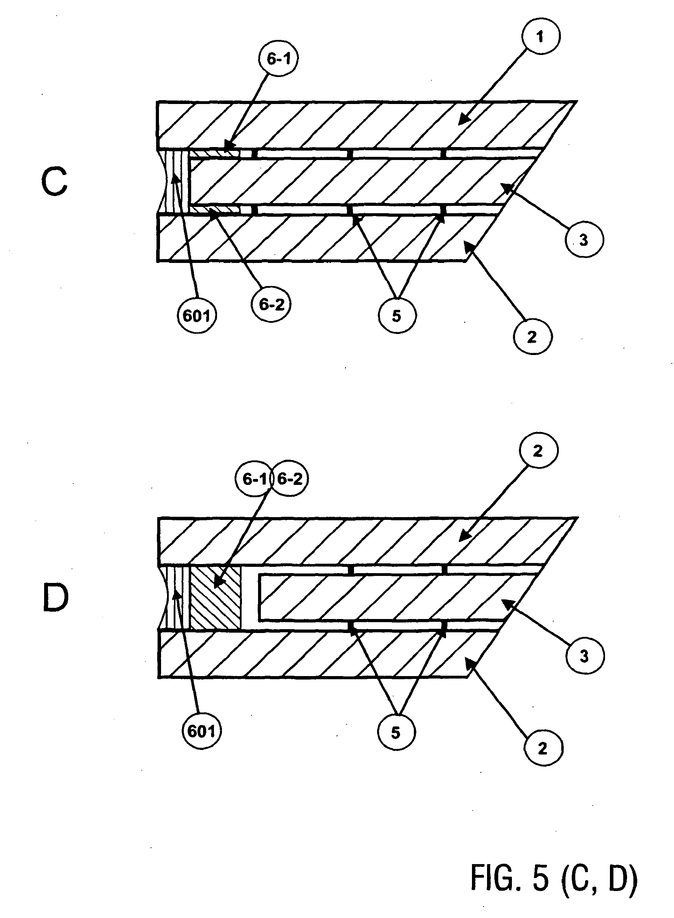

In weiteren Ausführungsvarianten besitzen die Glasplatten 1, 2, 3 geringfügig unterschiedliche geometrische Abmessungen. In Figur 5A sind die Glasplatten 1, 2, 3 so dimensioniert, dass beim Aufeinanderlegen ein möglichst vollständig umlaufender Steg bzw. Vorsprung mit einer Breite von typischerweise jeweils ungefähr 5 mm bis 20 mm (siehe $X_b$ in Fig. 5A) ausgebildet wird. Auf diesen Steg wird dann ein Dichtstoff für die Randabdichtung 6-1, 6-2, 601 appliziert. Beim Aufschmelzen kann das Material sehr gut an den Plattenkanten verlaufen, dort eine bessere und gleichmäßigere Haftung bewirken sowie aber auch durch die Kapillarwirkung optimal in den Raum zwischen die Glasplatten (siehe 6-1, 6-2) eindringen. Auf diese vorteilhafte Weise wird die Vakuumdichtheit und Langlebigkeit des erfindungsgemäßen Verglasungselementes verbessert. Andere vorteilhafte Modifikationen gehen aus den Figuren 5B, 5C hervor, bei denen die innere Glasplatte 3 relativ zu den Kanten der äußeren Glasplatten 1, 2 herausragt oder zurückgesetzt ist.

Eine besonders vorteilhafte Ausführungsform ist schematisch in Figur 5D dargestellt. Die mechanische Belastbarkeit des Verglasungselementes lässt sich noch weiter steigern, indem die Glasplatte 3 nunmehr mindestens teilweise schwimmend bzw. frei beweglich, das heißt ohne feste Anbindung zur Randabdichtung, eingebaut wird. Ganz besonders bevorzugt ist die Ausgestaltungsform, bei der die Glasplatte 3 an keiner der Kanten mit der Randabdichtung 6-1, 6-2, 601 fest verbunden ist, sich also nahezu völlig frei zwischen den Glasplatten 1, 2 bewegen kann. Dadurch können die unterschiedlichsten äußeren Belastungen und/oder Deformationen bzw. Ausdehnungen und/oder geometrische Schwankungen noch besser ausgeglichen und vor allem gleichmäßig verteilt werden. Derartige geometrische Schwankungen entstehen zum Beispiel durch Maßtoleranzen und Unregelmäßigkeiten (zum Beispiel Welligkeiten, Unebenheiten usw.) direkt bei der Herstellung der Einzelbestandteile des erfindungsgemäßen Verglasungselementes. Als besonders geeignet hat sich diese Ausführungsvariante zur Herstellung von gebogenen oder gekrümmten Verglasungselementen erwiesen.

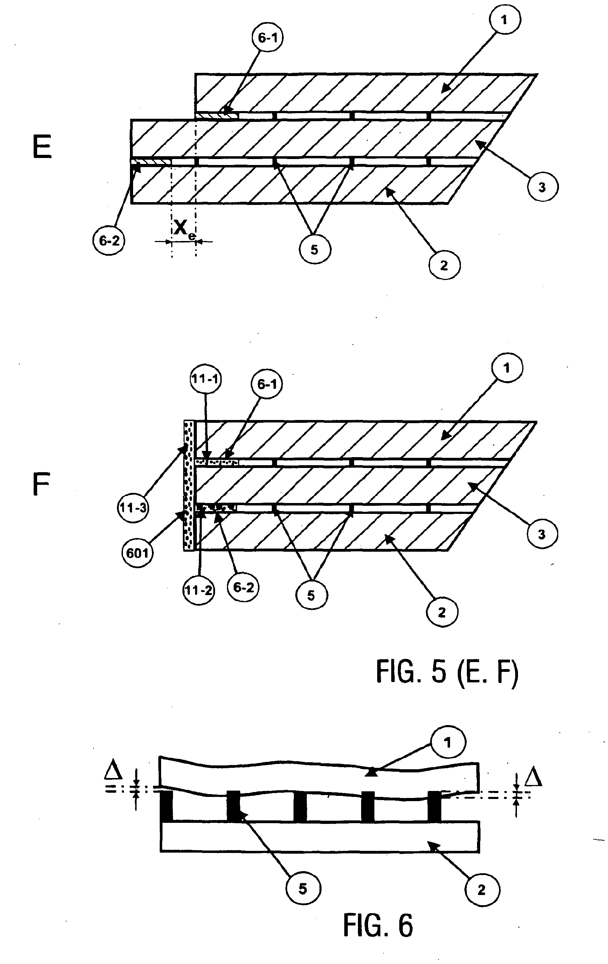

Mit einer weiteren vorteilhaften Ausführungsvariante entsprechend Figur 5E wird eine Reduzierung bzw. Vermeidung von unerwünschten Wasserkondensationen am Rand erhalten. Die Glasplatten 1, 2, 3 werden dabei in einer etwas geometrisch versetzten Anordnung zusammengefügt. Entscheidend dabei ist allerdings, dass die Randabdichtungen 6-1, 6-2 möglichst nicht direkt übereinander liegen, sondern vorzugsweise räumlich voneinander getrennt sind, so dass der Wärme- oder Kältetransport gezwungenermaßen über die Glasplatte 3 verlaufen muss. Je größer der Abstand $X_e$ eingestellt wird, desto besser lässt sich die Kondensation unterbinden. Für die Praxis sind Werte für $X_e$ von einigen Millimetern bis wenigen Zentimetern vollkommen ausreichend.

Durch eine weitere Ausgestaltungsvariante entsprechend Figur 5F lassen sich die unerwünschten Kondensationen im Randbereich des Verglasungselementes dadurch vermindern bzw. vollständig vermeiden, indem an diesen Stellen lokal eine zusätzliche Aufheizung erfolgt. Es hat sich als vorteilhaft erwiesen, wenn die Randabdichtungen des erfindungsgemäßen Verglasungselementes oder Teile davon zusätzlich als Widerstandsheizung verwendet werden. Bei der Verwendung von leitfähigen Glas-Metall-Bondsystemen zur Randabdichtung stellt sich die Realisierung sehr einfach dar, weil die eingesetzten metallischen Stoffe zugleich als ohmscher Widerstand direkt benutzt werden können. Bestehen die Randabdichtungen aus elektrisch isolierenden Stoffen, werden in vorteilhafter Weise elektrisch leitfähige Partikel, Drähte oder Bänder oder gleichwertige Komponenten beigemischt bzw. eingebettet. Diese Situation ist beispielhaft in Figur 5F dargestellt. Durch die Zusätze 11-1, 11-2 und/oder 11-3 wird die Leitfähigkeit des Randabdichtungsmaterials definiert eingestellt. Die jeweilige Konzentration der Beimengungen ist so vorzunehmen, dass der erforderliche, auch von der Bauteilgeometrie abhängige Gesamtwiderstand erreicht wird. Besonders vorteilhaft ist es, wenn die leitfähigen wärmedämmenden Beschichtungen im Randbereich oder Teile davon für die Widerstandsheizung mitgenutzt werden.

**Ausführungsbeispiel 6**

Es ist bekannt, dass die Oberflächen von thermisch vorgespannten oder teilvorgespannten Gläsern nach dem Härteprozeß nicht gleichmäßig sind und immer Unebenheiten in Form von gewissen Welligkeiten aufweisen. Derartige Unebenheiten sind prozess- oder verfahrensimmanent und entstehen zum Beispiel durch das Eindrücken der Transportrollen auf das bei hohen Temperaturen von über 600°C erweichte Glas. Die eingeprägten Unebenheiten lassen sich in ihrer Lage, Form, Ausdehnung und Amplitude nicht kontrollieren und variieren statistisch von Glasplatte zu Glasplatte und von Charge zu Charge. Derartige Probleme lassen sich bei der Verwendung von chemisch vorgespanntem Glas nicht beobachten, weil bei diesem Härteverfahren niedrigere Temperaturen unterhalb der Transformationstemperatur des Glases zur Anwendung gelangen.

Gerade diese Welligkeiten führen dazu, dass die durch den von außen einwirkenden Atmosphärendruck hervorgerufenen hohen mechanischen Lasten nicht gleichmäßig auf die Abstandhalter übertragen werden können und somit lokal extreme Verbiegungen bzw. mechanische Belastungen mit das Bauteil zerstörender Wirkung auftreten können.

In Figur 6 ist dieser Sachverhalt in vereinfacht schematisch illustriert. Aus Übersichtlichkeitsgründen ist das erfindungsgemäße Verglasungselement exemplarisch nur mit der thermisch vorgespannten Glasplatte 1, welche durch die beschriebenen Welligkeiten charakterisiert ist, und der Glasplatte 2 gezeigt, die vollständig plan gebildet ist. Wie aus der Figur 6 hervorgeht, treten bei der Beabstandung der Glasplatten 1, 2 lokal variierende Toleranzen $\Delta$ auf. Um nun eine gleichmäßige Übertragung der von außen einwirkenden Belastungen auf die Abstandhalter 5 zu erhalten, müssten diese unterschiedliche geometrische Abmessungen aufweisen. Dies lässt sich jedoch in einer normalen Produktion praktisch nicht realisieren.

Diese Aufgabenstellung lässt sich durch das nachstehend vorgeschlagene Verfahren und die beschriebenen Verfahrensschritte lösen.

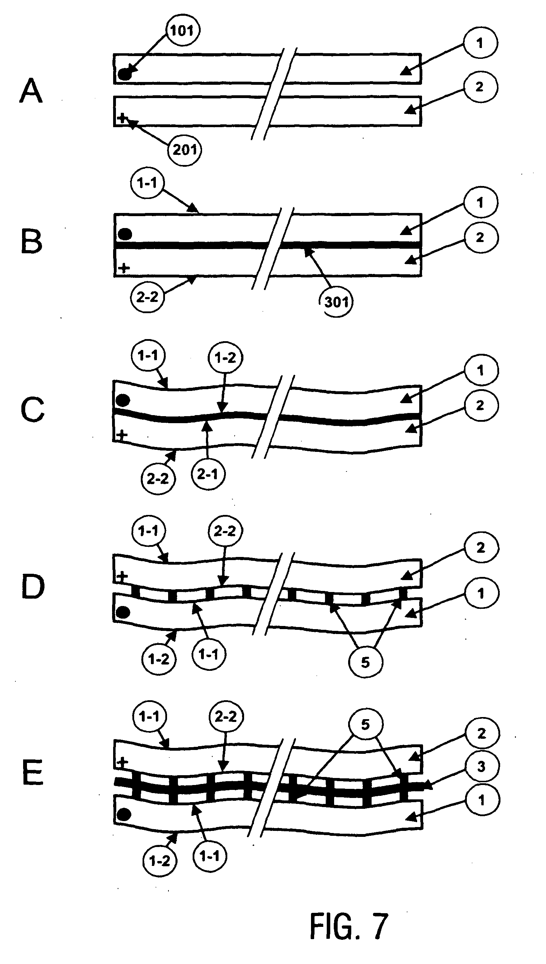

(A) Vorproduktion des Glasplattenpaares 1, 2 (vergleiche Figur 7A)

Dieser Verfahrenschritt umfasst zunächst den Zuschnitt der einzelnen Glasplatten 1, 2, der wahlweise durch mechanische Verfahren oder mittels Laser (zum Beispiel $CO_2$- Nd-YAG-Laser) durchgeführt wird. Weitere typische Arbeitsschritte sind die Reinigung, die Kantenbearbeitung, das Einbringen möglicher Bohrungen oder dergleichen, Maßnahmen zur Oberflächenveredelung durch zum Beispiel Beschichtungen, die Qualitätskontrolle usw.).

(B) Aufeinanderlegen der Glasplatten 1, 2 zu einem Glasplattenstapel (vergleiche Figur 7B)

Die vorgefertigten, zunächst noch planen Glasplatten 1, 2 werden passgenau aufeinander abgelegt und der Plattenstapel 11 erhalten. Gegebenenfalls können Klammern oder andere Hilfsmittel angebracht werden, um ein Verschieben der Glasplatten gegeneinander zu verhindern. Damit es beim thermischen Vorspannen nicht zu einem Verkleben der beiden Glasplatten 1, 2 miteinander kommt, wird vorzugsweise zwischen die beiden Glasplatten eine möglichst chemisch inerte Zwischenlage oder ein Trennmittel 301 eingebracht. Wichtig dabei ist, dass durch 301 die identische Ausbildung der Oberflächenkonturen an den beiden Glasplatten nicht behindert wird. Zur besseren Anschaulichkeit für die Zuordnung der gegenseitigen Position der Glasplatten 1, 2 sind in Figur 7b spezielle Markierungen 101, 201 eingefügt.

(C) Thermisches Härten des Glasplattenstapels (vergleiche Figur 7C)

Die nach dem thermischen Vorspannen erhaltenen Glasplatten 1, 2 weisen nun die schon beschriebenen Welligkeiten auf. In vorteilhafter Weise sind nun die Welligkeiten beziehungsweise Unebenheiten an allen Oberflächen der beiden Glasplatten vollkommen identisch eingeprägt, wie aus Figur 7C hervorgeht. Die beim gemeinsamen schlagartigen Abkühlen des Plattenstapels 11 an den Glasoberflächen erzeugten Druckspannungen (Härtung) sind jedoch im Gegensatz zum konventionell gehärteten Glas nicht symmetrisch eingeprägt, da die Kühlluft nicht an die Oberflächen 1-2 und 2-1 gelangen kann. Dadurch bilden sich nur an den Oberflächen 1-1 und 2-2 die gewünschten Druckspannungen aus. Besonders vorteilhaft ist, wenn auf den Glasoberflächen 1-1, 2-2 eine Druckspannung von mindestens 75 MPa vorliegt. Damit wegen dieser asymmetrischen Spannungsverteilung innerhalb der Glasplatten 1, 2 keine Eigenverbiegung auftritt, sollten je nach Größe möglichst Glasplatten mit einer Mindestdicke von zirka 3 mm zur Verwendung gelangen.

(D) Fertigung des erfindungsgemäßen Verglasungselementes (vergleiche Figur 7D)

Im Anschluss an eine Nachbereitung der vorgespannten Glasplatten 1, 2 (Reinigung, ggf. Beschichtung, Qualitätskontrolle und so weiter) werden diese entsprechend Figur 7D nun vertauscht angeordnet. Die ursprünglich unten angeordnete Glasplatte 2 wird nunmehr zur oberen Glasplatte und umgekehrt. Da bei dieser Anordnung die Oberflächenkonturen identisch sind, treten in bevorzugter Weise nunmehr keine Toleranzen Δ hinsichtlich der Beabstandung der Glasplatten 1, 2 mehr auf, so dass die von außen wirkenden mechanischen Belastungen gleichmäßig über die Abstandhalter 5 abgetragen werden können. Die asymmetrisch vorgespannten Glasplatten 1, 2 sind nun so angeordnet, dass in besonders bevorzugter Weise die gehärteten Oberflächen 1-1, 2-2 nun zum Zwischenraum 4 weisen. Dadurch ist es möglich geworden, die von den hohen Scher- und Reibungswirkungen zwischen den Abstandhaltern 5 und den Glasplatten 1, 2 verursachten kritischen Mikrodefekte und Beschädigungen weitestgehend zu vermeiden.

Diese Ausführungsvariante wird ganz besonders bevorzugt für wärmedämmende Verglasungselemente bestehend nur aus den Glasplatten 1, 2 verwendet. Durch das Einfügen einer vorzugsweise möglichst dünnen und dadurch etwas deformierbaren Glasplatte 3 mit einer Dicke von zirka kleiner oder gleich 1,8 mm (vergleiche Figur 7E) kann sich diese den wellenförmigen Unebenheiten der Glasplatten 1, 2 anpassen, so dass letztendlich ein vollständig funktionsfähiges Verglasungselement erhalten wird.

**Ausführungsbeispiel 7**

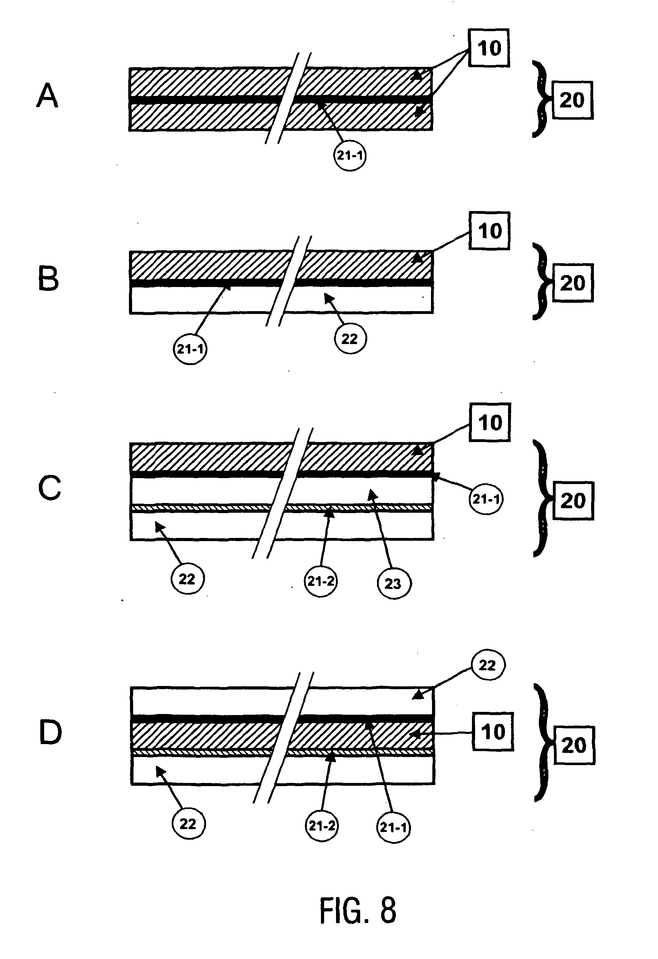

Die Figur 8A zeigt eine vorteilhafte Ausführung des erfindungsgemäßen Bauelementes 20, bei der mindestens zwei erfindungsgemäße Verglasungselemente 10 durch mindestens eine Zwischenschicht 21-1 miteinander zu einem Verbund zusammengefügt sind. Durch die dargestellte Konstruktion ist es möglich, sowohl die Wärmedämm-, Schallschutz- wie auch die Sicherheitseigenschaften noch weiter zu verbessern. Der Verbund kann durch die aus dem Stand der Technik bekannten Verfahren hergestellt werden. Geeignet ist vor allem das so genannte Laminierverfahren, bei dem zwischen die Verglasungselemente 10 ein Verbundmaterial in Form von zum Beispiel einer Folie, eines Foliensandwiches oder eines Filmes eingebracht ist. Das erfindungsgemäß verwendete Verbundmaterial enthält vorzugsweise mindestens einen Kunststoff, der aus der Gruppe von Materialien ausgewählt ist, die Polyvinylbutyral (PVB), Polyurethan (PU), Polypropylen (PP), Polyacrylat, Ethylenvinylacetat (EVA), Polyethylen, Polycarbonat, Polymethylmetacrylate, Polyvinylchlorid, Polyethylenterephthalat, Polyacetatharz, Silikonsysteme, Copolymere, aus z. B. Vinylchlorid, Ethylen oder Acrylaten, Gießharze und UV-, thermisch oder an Luft härtbare Klebstoffe umfasst. Durch das Einbringen von unbeschichteten, beschichteten, bedruckten oder mit schaltbaren Funktionen für Sonnen- und/oder Sichtschutz versehene Folien (zum Beispiel auf der Basis von Polykarbonat (PC), Polymethylmethacrylat (PMMA) oder Polyethylenterephtalat (PET) usw.), von Kunststoffplatten, von Metalleinlagen usw. direkt in die Zwischenschicht 21-1 können die Produkteigenschaften der erfindungsgemäßen Ausführungsform noch umfassender variiert werden.

In den Figuren 8B, 8C und 8D sind weitere Ausführungsvarianten des erfindungsgemäßen Verglasungselementes exemplarisch dargestellt, bei denen das Verglasungselement entweder einseitig (vergleiche Figuren 8B und 8C) oder beidseitig (vergleiche Figur 8D) mit weiteren, aus mitunter unterschiedlichen Materialien aufgebauten Glasplatten oder Plattensystemen und/oder auch anderen kompletten Verglasungssystemen oder Teilen davon verbunden ist.

Entsprechend der in Figur 8B dargestellten Ausführungsvariante wird zum Beispiel mindestens ein wärmedämmendes Verglasungselement 10 mit mindestens einer weiteren, möglichst thermisch teilvorgespanntem Glasplatte 22 oder dergleichen durch einen Verbund so kombiniert, dass für den Überkopfbereich geeignete Sicherheitsverglasungselemente entstehen. Es ist aber auch möglich, das in Figur 8B dargestellte Verbundmaterial 21-1 sowie die Glasplatte 22 durch eine aufgeklebte Folie zu ersetzen. Auf diese Weise lässt sich bei Beschädigung oder Zerstörung des Verglasungselementes ein gewisser Splitterschutz erzielen. In einer anderen Ausgestaltungsform handelt es sich bei der Glasplatte 22 um ein völlig anderes Funktionsglassystem wie zum Beispiel eine Brandschutz-, eine Panzerverglasung, eine licht- und energiesteuernde Verglasung oder auch Kombinationen daraus. Auf diese besonders vorteilhafte Weise lassen sich kostengünstig, bei gleichzeitig niedrigem Gewicht und geringer Einbautiefe nahezu alle bekannten Funktionsglassysteme mit einem sehr guten Wärmeschutz kombinieren.

In einer weiteren Variante wird das erfindungsgemäße Verglasungselement 10 entsprechend Figur 8C mit Glasplatten aus zum Beispiel Polykarbonat 23 und möglichst gehärtetem Glas 22 in einem Mehrfachverbund kombiniert. Die Zwischenschichten 21-1 und 21-2 müssen dabei keineswegs identisch sein, sondern können auch aus völlig verschiedenen Materialien bestehen und/oder mit Einlagen versehen sein. Als besonders vorteilhaft erweist sich das Einbringen von Metallfolien, Metallgittern und/oder auch anderen elektrisch gut leitenden Materialien, weil sich durch diese Ausführungsvariante sogar noch ein ausgezeichneter elektromagnetischer Schutz erreichen lässt. Damit wird erfindungsgemäß ein hochwärmedämmendes transparentes Bauteil mit besonders guten Schallschutzwerten sowie einem sehr hohen Sicherheitsstandard gegenüber Durchbruch, Beschuss, Explosionen, Terrorangriffen, gesundheitsschädigenden elektromagnetischen Einstrahlungen, Abhör- bzw. Lauschangriffen oder sonstigen äußeren Angriffen erhalten.

Bei einer mehrfachen Anordnung dieser oder einer ähnlichen Kunststoff-Glas-Konstellation oder einem beidseitigen Mehrfachverbund (siehe Figur 8D) lassen sich die schall- und sicherheitstechnischen Eigenschaften weiter verbessern und auf Grund der vielfältigen Kombinationsmöglichkeiten sogar für den jeweiligen Verwendungszweck optimal anpassen.

**Ausführungsbeispiel 8**

Beim Bau von Gebäuden in kalten Regionen kommt es heute mehr denn je darauf an, eine möglichst perfekte Wärmeisolation zu erreichen. Die bei den herkömmlichen Verglasungssystemen im Vergleich zu den Außenwänden deutlich geringere Wärmedämmung stellt dabei immer wieder einen entscheidenden Schwachpunkt dar. Oftmals spielen aber auch konstruktive und bautechnische Anforderungen, wie zum Beispiel die Einhaltung von Standards hinsichtlich Einbautiefe, Konstruktion des Fensterrahmens sowie der Haltesysteme usw., eine wichtige Rolle. In den letzten Jahrzehnten haben sich in einigen Ländern mittlerweile standardisierte Rahmenkonstruktionen mit einer Einbautiefe von zum Beispiel zirka 24 mm millionenfach etabliert. In einen solchen Standardrahmen werden heute konventionelle Verglasungselemente mit einem Scheibenzwischenraum SZR in der typischen Konstruktionsweise "Glas mit 4mm, beschichtet / SZR mit 16mm / Glas mit 4mm" oder gleichwertige bei einem U-Wert von etwa 1,1 W/(m$^2$·K) bis 1,0 (W/m$^2$·K) eingesetzt.

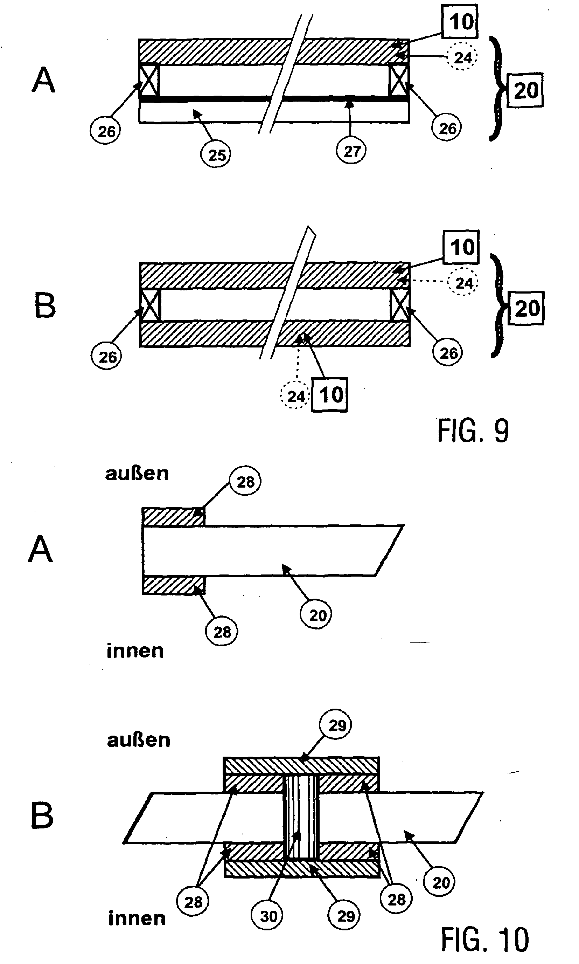

In vorteilhafter Weise werden Ausführungsvarianten vorgeschlagen, mit denen bei Einhaltung der aus der Praxis geforderten Standard-Einbautiefen sogar noch deutlich niedrigere U-Werte von kleiner oder gleich 0,3 W/(m$^2$·K) möglich sind. In Figur 9 sind in seitlichen Schnitten einige Aufbauten 20 solcher Isolierglaseinheiten exemplarisch dargestellt. Entsprechend Figur 9A besteht eine derartige Isolierverglasung aus einer Anordnung von mindestens zwei Glasplatten 24, 25, wobei nunmehr eine dieser aus dem erfindungsgemäßen Verglasungselement 10 gebildet wird. Die Glasplatten sind mittels bekannter Verfahren durch ein umlaufendes, nach außen hin abgedichtetes Abstandhaltersystem 26 fest verbunden. Der Aufbau der Isolierverglasung entsprechend Fig. 9A ist beispielhaft wie folgt:

"Verglasungselement 10 mit zirka 12mm / SZR mit 8mm / Glassystem mit 4mm" oder "Verglasungselement 10 mit zirka 10mm / SZR mit 10mm / Glassystem mit 4mm" .

Es können dabei alle drei Einzeldicken variiert werden, jedoch ist zu berücksichtigen, dass der SZR einen Wert von 6 mm nicht unterschreiten sollte, da sich sonst die wärmeisolierenden Eigenschaften der Gesamtverglasung wieder deutlich verschlechtern würden. Das Glas 25 kann entsprechend den vorherigen Beschreibungen zum Beispiel zusätzlich mit Beschichtungen 27 zum Zwecke einer weiteren Wärme- und/oder Sonnenschutzes usw. versehen und/oder aus verschiedenen Glaskombinationen oder Funktionsglassystemen usw. aufgebaut sein. Aber auch das erfindungsgemäße Verglasungselement 10 kann in Anlehnung an die Ausführungsvarianten aus Figur 8 nahezu beliebig mit weiteren Funktionsglassystemen oder anderen Bauteilen kombiniert werden.

Eine weitere Verbesserung wird erreicht, wenn entsprechend Figur 9B gleichzeitig beide Glasplatten 24, 25 aus dem erfindungsgemäßen Verglasungselement 10 gebildet sind. Bei einem Aufbau des Isolierglases entsprechend "Verglasungselement 10 mit zirka 8mm / SZR mit 8mm / Verglasungselement 10 mit zirka 8 mm" oder "Verglasungselement 10 mit zirka 10mm / SZR mit 6mm / Verglasungselement 10 mit zirka 8mm" lässt sich die beispielhafte Systemtiefe von 24 mm problemlos erreichen. Bei dieser Ausführungsvariante lassen sich die U-Werte auf weniger als 0,3 W/(m$^2$·K) reduzieren.

Entsprechend lassen sich für die Isolierverglasungen gemäß Figur 9 auch Anordnungen 20 bestehend aus mehr als zwei wärmedämmenden Verglasungselementen 10 konstruieren.

**Ausführungsbeispiel 9**

Der Einbau des erfindungsgemäßen Verglasungselementes und von mindestens ein solches enthaltendes Bauteil in z. B. Gebäude, Fahrzeuge, technische Anlagen usw. kann mit herkömmlichen Rahmenkonstruktionen erfolgen. Jedoch stellen die bekannten Rahmen oftmals unerwünschte Kältebrücken dar. Ganz besonders gravierend wirkt sich dies bei sehr geringen U-Werten aus, wie sie gerade bei den erfindungsgemäßen Verglasungselementen vorliegen.

In der Ausführungsvariante entsprechend Figur 10A wird eine Konstruktion vorgeschlagen, bei der möglichst an den Rändern des Bauteils 27 entweder außen, innen oder auch beidseitig Hilfsrahmen 28 angebracht sind. Die Hilfsrahmen lassen sich mit einer baulichen Unterkonstruktion und/oder anderen Hilfsrahmen oder dergleichen mit weiteren Bauteilen mechanisch verbinden. Von besonderem Vorteil ist, wenn die mechanischen Verbindungen entweder nur außen oder nur innen angeordnet sind. Diese besondere Ausgestaltung ist schematisch in Figur 10B dargestellt. Die Bauteile 27 werden durch die mechanischen Vorrichtungen 29 miteinander verbunden. Die Elemente 29 sind so ausgelegt, dass sich diese ebenfalls für eine Montage an anderen baulichen Unterkonstruktionen oder dergleichen verwenden lassen. Durch diese spezielle Ausgestaltung lassen sich der äußere und innere Bereich thermisch entkoppeln. Zur Vermeidung von Wärmeverlusten im Bereich zwischen den Bauteilen werden dort hochwärmeisolierende Abdichtungen 30 eingebracht. Als Materialien eignen sich hierzu besonders poröse und/oder mehrlagige Wärmedämmstoffe oder auch hochdämmende Vakuumpanele. In anderen Ausführungen werden die Bauteile 27 direkt an einer stabilen Unterkonstruktion verklebt oder durch bauliche Vorrichtungen mechanisch angepresst, wobei auch hier darauf zu achten ist, dass die thermische Entkopplung der Außen- und Innenseite in der beschriebenen Weise erfolgt.

Die gezeigten Ausführungsbeispiele lassen sich nicht nur in der dargestellten Form verwenden, sondern vielmehr sind auch beliebige Kombinationen aus diesen Beispielen möglich.

Das Bauelement schließt nicht nur die Verwendung von Glas oder dergleichen als Plattenmaterialien, was einem Spezialfall für transparente bzw. semitransparente Bauelemente darstellt, ein. Grundsätzlich lassen sich alle mindestens teilweise durchsichtigen Materialien zum Einsatz bringen, die in größeren plattenförmigen oder gebogenen bzw. gekrümmten Geometrien herstellbar sind, eine ausreichende mechanische Festigkeit verfügen und vakuumtauglich sind.

Für die Glasplatten 1, 2, 3 lassen sich Gläser mit sehr unterschiedlichen chemischen Zusammensetzungen und Struktureigenschaften einsetzen. Neben dem typischerweise als Standard-Floatglas bezeichneten Natron-Kalk-Glas sind auch solche Glasarten wie Natron-Silikat-Glas, Aluminium-Silikat-Glas Borosilikatglas, beliebige kristallisierte oder teilkristallisierte Gläser und dergleichen geeignet. Die einzelnen Gläser können ungehärtet, thermisch gehärtet (thermisch vorgespannt), teilvorgespannt, durch Ionenaustausch vorgespannt bzw. behandelt (chemisch gehärtet), durch Hartstoffbeschichtungen oder auch durch Implantationen oder Eindiffusion im Oberflächenbereich modifiziert sein.

In Abhängigkeit von den jeweils spezifischen Anwendungen des Bauteiles können für die Glasplatten aber auch andere Glastypen oder Kombinationen daraus genutzt werden, was noch breitere Anwendungsmöglichkeiten erschließt. Beispielhaft können dies sein: Dekor- und Designgläser, Gläser mit Einlagen wie zum Beispiel Drahtgläser usw., niedrig oder auch hoch reflektierende Gläser, mit keramischen oder anderen Farben oder dergleichen versehene Gläser, farbige Gläser oder Klarglas, laminierte Gläser (zum Beispiel Verbund-Sicherheitsgläser) usw.. Aber auch Gläser mit funktionalisierten Oberflächen (Funktionsschichten) für zum Beispiel Wärme- und Sonnenschutz, Antifogging, hydrophoben bzw. hydrophilen Eigenschaften, Wärme- und UV-Absorption, mit lichtkonvertierenden Eigenschaften (Photovoltaik, Solarthermie) versehene und/oder deren Kombinationen usw. sind einsetzbar.

Das erfindungsgemäße Verglasungselement erlaubt nicht nur flache Konstruktionen in beliebigen Formen und Formaten, sondern insbesondere auch gebogene oder gekrümmte.

Das erfindungsgemäße Verglasungselement ist vor allem dort von wirtschaftlicher Bedeutung, wo wärmeisolierende Eigenschaften, ggf. auch in Kombination mit niedrigem Gewicht und/oder verringerter Einbautiefe und/oder Schallschutz und/oder Sicherheit und/oder Brandschutz und/oder elektromagnetischen Schutzeinrichtungen usw. gefragt sind. So kann das Bauteil in verschiedenen Bereichen verwendet werden wie zum Beispiel in der Bauindustrie (Gebäudeverglasungen, Glasdächer, Glaswände, Abschirmungen, Heizelemente usw.), in Transportmitteln (Autos, Schiffe, Flugkörper, Bahnfahrzeuge), als Teil einer Maschine oder Anlage (Kühlschränke, -truhen oder sonstige -aggregate; Transport- oder Lagereinrichtungen für kühlende bzw. heizende oder zu kühlende bzw. zu heizende Dinge; Sonnenkollektoren, Energiewandler, -anlagen oder dergleichen; Heizeinrichtungen; Hitzeschilder) usw..

## Patentansprüche

1.    Wärmedämmendes Verglasungselement (10), das umfasst:

- eine Glasplatten-Anordnung mit einer ersten, nach außen gerichteten Glasplatte (1), einer zweiten, nach innen gerichteten Glasplatte (2) und mindestens einer dritten, zwischen den Glasplatten (1, 2) angeordneten, innen angeordnete Glasplatte (3), wobei die Glasplatten innen angeordnete Oberflächen (1-2, 3-1, 3-2, 2-1) aufweisen,
- eine Abstandhaltereinrichtung (5), die zur Einstellung eines Abstandes zwischen den Glasplatten eingerichtet ist, und
- eine Randabdichtungseinrichtung (6, 6-1, 6-2, 601), die zur Abdichtung von Zwischenräumen (4, 4-1, 4-2) zwischen den Glasplatten gegenüber einer Umgebung eingerichtet ist, wobei
- das Verglasungselement (10) dazu eingerichtet ist, das in den Zwischenräumen (4, 4-1, 4-2) ein gegenüber dem äußeren Atmosphärendruck verminderter Druck gebildet ist,

**dadurch gekennzeichnet, dass**

- mindestens eine der innen angeordneten Oberflächen (1-2, 3-1, 3-2, 2-1) mit mindestens einer niedrig emittierenden Beschichtung versehen ist,
- für die solaren Absorptionen $A_1$, $A_2$ der ersten und zweiten Glasplatte (1, 2) die Bedingung $0,3 \leq (A_1 / A_2) \leq 4$ erfüllt ist, und
- die dritte Glasplatte (3) eine solare Absorption $A_3 \leq 0,17$ aufweist.

2.    Verglasungselement nach Anspruch 1, bei dem

- genau eine niedrig emittierende Beschichtung enthalten ist, wobei diese entweder auf der Oberfläche (1-2) der ersten nach außen gerichteten Glasplatte (1) oder auf der Oberfläche (3-1) der mindestens dritten, swischen den Glasplatten (1,2) angeordneten, innen angeordneten Glasplatte (3) angebracht ist,

- genau zwei niedrig emittierende Beschichtungen enthalten sind, von denen eine auf der innen angeordneten Oberfläche (1-2) der nach außen gerichteten Glasplatte (1) angebracht ist,
- genau drei niedrig emittierende Beschichtungen enthalten sind,
- die niedrig emittierenden Beschichtung eine Emissivität von kleiner oder gleich 0,16 aufweist, oder
- die niedrig emittierenden Beschichtung silberhaltige Schichtpakete, semitransparente Metallschichten, transparente leitfähige Oxide, Gemische daraus oder andere gleichwertige Materialien enthält.

3. Verglasungselement nach mindestens einem der vorhergehenden Ansprüche, bei dem

- die mindestens eine innen angeordnete Glasplatte (3) unbeschichtet ist.

4. Verglasungselement nach mindestens einem der vorhergehenden Ansprüche, bei dem

- die ersten und zweiten Glasplatten (1, 2) eine Dicke von kleiner oder gleich 10 mm aufweisen,
- die mindestens eine innen angeordnete Glasplatte (3) eine geringere Dicke als die ersten und zweiten Glasplatten (1, 2) aufweist, und/oder
- die mindestens eine innen angeordnete Glasplatte (3) eine Dicke von kleiner oder gleich 6 mm aufweist.

5. Verglasungselement nach mindestens einem der vorhergehenden Ansprüche, bei dem

- die Glasplatten (1, 2, 3) aus ungehärteten oder gehärteten Materialien bestehen, die Kalk-Natron-Glas, alkaliarme oder -freie Silikatgläser, kristallisierte oder teilkristallisierte Gläser oder Kombinationen daraus umfassen, und/oder
- die gehärteten Glasplatten (1, 2, 3) auf mindestens einer Glasoberfläche eine Oberflächendruckspannung von mindestens 75 MPa aufweisen.

6. Verglasungselement nach mindestens einem der vorhergehenden Ansprüche, bei dem

- auf der mindestens einen innen angeordneten Glasplatte (3) auf beiden Oberflächen (3-1, 3-2) Abstandhalter (5) befestigt sind,
- die mindestens eine innen angeordnete Glasplatte (3) mindestens entlang einer Kante nicht mit der Randabdichtung (6-1, 6-2, 601) der ersten und zweiten Glasplatten (1, 2) mechanisch starr verbunden ist, und/oder
- die mindestens eine innen angeordnete Glasplatte (3) an allen Kanten umlaufend kleiner als die ersten und zweiten Glasplatten (1, 2) ausgebildet und an keiner der Kanten über die Randabdichtung (6-1, 6-2, 601) mit den Platten (1, 2) mechanisch starr verbunden ist.

7. Verglasungselement nach Anspruch 6, bei dem

- die Abstandhalter (5) mindestens teilweise aus Substanzen mit einer Wärmeleitfähigkeit von kleiner oder gleich 25 W/(m·K) bestehen und eine Druckfestigkeit von mindestens 350 MPa aufweisen,
- die Abstandhalter (5) einen gegenseitigen mittleren Abstand von größer 25 mm, einen mittleren Durchmesser von kleiner oder gleich 1,5 mm und eine Höhe im Bereich von zwischen 0,1 mm und 1,5 mm aufweisen, und/oder
- die Abstandhalter (5) aus kugel-, scheiben-, ring- oder plattenförmigen Glaskörpern mit einer geometrischen Abmessung von kleiner oder gleich 1,5 mm aufgebaut sind und aus Materialien bestehen, die Kalk-Natron-Glas, alkaliarme oder -freie Silikatgläser, Quarzglas, kristallisierte oder teilkristallisierte Gläser oder Kombinationen daraus umfassen.

8. Verglasungselement nach mindestens einem der vorhergehenden Ansprüche, bei dem

- die Randabdichtung (6, 6-1, 6-2, 6-3, 601) vakuumdichte Materialien umfasst und mit einer Breite von mindestens 3 mm vollständig umlaufend vorgesehen ist,
- die Randabdichtung (6, 6-1, 6-2, 6-3, 601) mindestens ein Material enthält, das aus den Gruppen von Substanzen ausgewählt ist, die Glas-Metall-Bondsysteme oder Glaslote (z. B. Metalle, Metallverbindungen bzw. -legierungen wie Zinn, Blei, Indium, Kupfer, Zinn, Zink und/oder Silber), bei geringen Temperaturen erweichende Gläser oder ähnliche glasartige Werkstoffe, Glasfritten, anorganische und/oder organische Kompositmaterialien, Sol-Gel-Verbindungen, Klebstoffe oder andere permeationsfeste Polymersysteme umfasst, und/oder
- die Randabdichtung (6, 6-1, 6-2, 6-3, 601) Klebstoffe und/oder permeationsfeste Polymersysteme enthält, die organische Materialien der Substanzklassen der Acrylate, Cyanoacrylate, Harze, Epoxysysteme, Polyurethane, und/oder Silane mindestens teilweise umfasst.

9. Verglasungselement nach mindestens einem der vorhergehenden Ansprüche, bei dem

- die Ecken der Glasplatten (1, 2, 3) abgerundet sind, wobei die Radien der Abrundung mindestens 5 mm betragen,
- die Ecken der Glasplatten (1, 2, 3) mit einer vorzugsweise beidseitig angebrachten Gehrung von mindestens 1 mm ausgestattet sind, und/oder
- die Eckbereiche der Glasplatten (1, 2, 3) durch zusätzliches Dichtungsmaterial mechanisch verstärkt ausgelegt sind, wobei die Breite $B_D$ der in den Diagonalen abgerundet verlaufenden Randabdichtung insbesondere mindestens 8 mm beträgt.

10. Verglasungselement nach mindestens einem der vorhergehenden Ansprüche, das

- eine von einer Ebenheit abweichende, gebogene oder gekrümmte Geometrie aufweist, und/oder
- das einen Wärmedämmwert (U-Wert) von kleiner oder gleich 0,8 W/(m$^2$K) aufweist.

11. Bauelement (20), das mindestens ein Verglasungselement (10) nach mindestens einem der vorhergehenden Ansprüche aufweist, wobei das mindestens eine Verglasungselement (10) einseitig oder beidseitig mit mindestens einem Glasbauteil (22, 23) durch Verbundmaterialien (21-1, 21-2) zusammengefügt ist.

12. Bauelement nach Anspruch 11, bei dem

- das Verbundmaterial (21-1, 21-2) in Form einer Folie, eines Foliensandwiches und/oder eines Filmes eingebracht ist und mindestens einen Kunststoff enthält, der aus der Gruppe von Materialien ausgewählt ist, die Polyvinylbutyral (PVB), Polyurethan (PU), Polypropylen (PP), Polyacrylat, Ethylenvinylacetat (EVA), Polyethylen, Polycarbonat, Polymethylmetacrylate, Polyvinylchlorid, Polyethylenterephthalat, Polyacetatharz, Silikonsysteme, Copolymere, aus z. B. Vinylchlorid, Ethylen oder Acrylaten, Gießharze und UV-, thermisch oder an Luft härtbare Klebstoffe umfasst, und/oder
- das Verbundmaterial (21-1, 21-2) Zusatzstoffe, Folien und/oder Metalleinlagen enthält.

13. Verfahren zur Herstellung eines Verglasungselements (10) nach mindestens einem der Ansprüche 1 bis 10, mit den Schritten:

- Bereitstellung der Glasplatten (1, 2) in einem Glasplattenstapel, und
- thermisches Härten des Glasplattenstapels, wobei die Glasplatten (1, 2) asymmetrisch gehärtete Oberflächen erhalten, die außen angeordnet sind,
- Zusammenlegen der Glasplatten (1, 2) in verschobener Anordnung, wobei die gehärteten Oberflächen (1-1) der ersten, nach außen gerichteten Glasplatte (1) und (2-2) der zweiten, nach innen gerichteten Glasplatte (2) zueinander und zu einem Zwischenraum 4 gerichte sind, und
- Endfertigung des Verglasungselementes (10).

14. Verfahren nach Anspruch 13, bei dem die mechanische Befestigung durch Rahmen oder durch andere voneinander thermisch entkoppelte mechanische Konstruktionen separat auf der Außen- und/oder Innenseite erfolgt.

15. Verwendung eines Verglasungselementes (10) oder Bauelementes nach mindestens einem der vorherigen Ansprüche:

- als Teil eines Gebäudes, z. B. Verglasungen, Glasdächer, Glaswände, Abschirmungen, Heizelement,
- als Teil eines Transportmittels, z. B. Autos, Schiffe, Flugkörper, Bahnfahrzeuge,
- als Teil von Transport- oder Lagereinrichtungen, z. B. für kühlende bzw. heizende oder zu kühlende bzw. zu heizende Gegenstände,
- als Teil von Sicherheitssystemen oder -einrichtungen, z. B. für Brandschutz, Schallschutz, Einbruch-, Beschuß- und Explosionssicherheit, elektromagnetische Abschirmung usw., oder
- als Teil einer Maschine, Anlage oder eines Gebrauchsgegenstandes, z. B. Kühlaggregate wie Kühlschränke und - truhen, Sonnenkollektoren, Heizeinrichtungen, Hitzeschilder.

**Claims**

1.  Heat insulating glazing element (10), comprising:

    - a glass pane arrangement with a first outward facing glass pane (1), a second inward facing glass pane (2) and at least a third glass pane (3) arranged between the glass panes (1, 2), wherein the glass panes comprise surfaces (1-2, 3-1, 3-2, 2-1) arranged on the inside,
    - a spacer assembly (5) provided for setting a distance between the glass panes, and
    - an edge seal assembly (6, 6-1, 6-2, 601) provided for sealing gaps (4, 4-1, 4-2) between the glass panes against the surroundings, wherein the glazing
    - element (10) is set up in such a way that the pressure in the gaps (4, 4-1, 4-2) is lower compared to the exterior atmospheric pressure,

    **characterized in that**

    - at least one of the surfaces arranged on the inside (1-2, 3-1, 3-2, 2-1) comprises at least one low emissivity coating layer,
    - the condition $0.3 \leq (A_1 / A_2) \leq 4$ is met for the solar absorptions $A_1$, $A_2$ of the first and second glass pane (1, 2), and
    - the solar absorption of the third glass pane (3) is $A_3 \leq 0.17$.

2.  Glazing element according to claim 1,

    - comprising exactly one low emissivity coating layer, wherein the layer is either applied to the surface (1-2) of the first outward facing glass pane (1) or to the surface (3-1) of the at least third glass pane (3) arranged on the inside between the glass panes (1, 2),
    - comprising exactly two low emissivity coatings, one of which is applied to the surface arranged on the inside (1-2) of the outward facing glass pane (1),
    - comprising exactly three low emissivity coating layers,
    - in which the emissivity of the low emissivity coating is smaller or equal to 0.16, or
    - in which the low emissivity coating layer comprises coating packages containing silver, semi-transparent metal coatings, transparent conductive oxides, mixtures thereof or other equivalent materials.

3.  Glazing element according to at least one of the preceding claims, in which

    - at least one glass pane (3) arranged on the inside is uncoated.

4.  Glazing element according to at least one of the preceding claims, in which

    - the thickness of the first and second glass panes (1, 2) is smaller or equal to 10 mm,
    - the thickness of the at least one glass pane (3) arranged on the inside is smaller than the first and second glass panes (1, 2), and/or
    - the thickness of the at least one of the glass panes (3) arranged on the inside is smaller or equal to 6 mm.

5.  Glazing element according to at least one of the preceding claims, in which

    - the glass panes (1, 2, 3) consist of unhardened or hardened materials comprising soda-lime glass, low-alkali or alkali-free silica glasses, crystallized or partly crystallized glasses or combinations thereof, and/or
    - the hardened glass panes (1, 2, 3) comprise a surface compressive stress of at least 75 MPa on at least one of the glass surfaces.

6.  Glazing element according to at least one of the preceding claims, in which

    - spacer assemblies (5) are attached on both surfaces (3-1, 3-2) of at least one of the glass panes (3) arranged on the inside,
    - the at least one glass pane (3) arranged on the inside is not mechanically rigidly connected with the edge seal assembly (6-1, 6-2, 601) of the first and second glass panes (1, 2) along at least one of the edges, and/or
    - the at least one glass pane (3) arranged on the inside is smaller along the circumference of all the edges than the first and second glass panes (1, 2,) and is not mechanically rigidly connected with the panes (1, 2) via the edge seal assembly (6-1, 6-2, 601) at any of the edges.

7. Glazing element according to claim 6, in which

- the spacer assemblies (5) are at least partially made of substances with a thermal conductivity of smaller or equal to 25 W/m$^2$K and comprise a pressure resistance of at least 350 MPa,
- the spacer assemblies (5) have a mutual average distance of greater than 25 mm, an average diameter of smaller or equal to 1.5 mm and a height ranging between 0.1 mm and 1.5 mm, and/or
- the spacer assemblies (5) are composed of sphere-, disk-, ring- or pane-shaped glass objects with a geometrical dimension that is smaller or equal to 1.5 mm and consist of materials comprising soda-lime glass, low-alkali or alkali-free silicate glasses, quartz glass, crystallised or partly crystallised glasses or combinations thereof.

8. Glazing element according to at least one of the preceding claims, in which

- the edge seal (6, 6-1, 6-2, 6-3, 601) comprises vacuum-tight materials and is provided with a width of at least 3 mm around the entire circumference,
- the edge seal (6, 6-1, 6-2, 6-3, 601) comprises at least one material selected from the groups of substances comprising glass to metal bonding systems or solder glasses (e.g. metals, metal compounds and metal alloys such as tin, lead, indium, copper, zinc and/or silver), glasses or similar glass-like materials that soften at low temperatures, fritted glasses, inorganic and/or organic composite materials, sol-gel compounds, adhesives or other permeation-resistant polymer systems, and/or
- the edge seal (6, 6-1, 6-2, 6-3, 601) contains adhesives and/or permeation-resistant polymer systems at least partially comprising organic materials of the acrylate, cyanoacrylate, resin, epoxy system, polyurethane substance classes, and or silanes.

9. Glazing element according to at least one of the preceding claims, in which

- the edges of the glass panes (1, 2, 3) are rounded, wherein the radii of the rounding are at least 5 mm,
- the corners of the glass panes (1, 2, 3) are attached with a mitre point of at least 1 mm preferably on both sides, and/or
- the corner regions of the glass panes (1, 2, 3) are mechanically reinforced with additional sealing material, wherein the width $B_D$ of the edge seal rounded at the diagonals is in particular at least 8 mm.

10. Glazing element according to at least one of the preceding claims, comprising

- a geometric shape that deviates from the flatness or is curved or bent, and/or
- a thermal insulation value (U value) of smaller or equal to 0.8 W/m$^2$K.

11. Component (20) comprising at least one glazing element (10) according to any one of the preceding claims, wherein the at least one glazing element (10) is joined on one or both sides to at least one glass component (22, 23) by means of compound materials (21-1, 21-2).

12. Component according to claim 11, in which

- the compound material (21-1, 21-2) is realized in the form of a foil, a foil sandwich and/or a film and comprises at least one synthetic material selected from the group of materials comprising polyvinyl butyral (PVB), polyurethane (PU), polypropylene (PP), polyacrylate, ethylene vinyl acetate (EVA), polyethylene, polycarbonate, polymethyl methacrylate, polyvinyl chloride, polyethylene terephthalate, polyacetate resin, silicone systems, copolymers, for example made of vinyl chloride, ethylene or acrylates, casting resins and adhesives hardenable by UV irradiation, heat or in air, and/or
- the compound material (21-1, 21-2) comprises additives, foils and/or metal inserts.

13. Method for the manufacture of a glazing element (10) according to at least one of the claims 1 to 10, comprising the steps:

- supply of the glass panes (1, 2) in a glass pane stack, and
- thermal hardening of the glass pane stack, wherein the surfaces of the glass panes (1, 2) are hardened asymmetrically and arranged on the outside,

- combining the glass panes (1, 2) in a offset arrangement, wherein the hardened surfaces (1-1) of the first outward facing glass pane (1) and (2-2) of the second inward facing glass pane (2) are facing one another and a space 4, and
- finishing of the glazing element (10).

**14.** Method according to claim 13, in which the mechanical attachment is carried out separately on the exterior and/or interior side by means of frames or other mechanical constructions thermally uncoupled from one another.

**15.** Method of using a glazing element (10) or component according to at least one of the preceding claims:

- as part of a building, e.g. glazing, glass roofs, glass walls, screens, heating elements,
- as part of a means of transportation, e.g. cars, ships, aerodynamic vehicles, railway vehicles,
- as part of transport or storage facilities, e.g. for cooling or heating objects or for objects requiring cooling or heating,
- as part of security systems or facilities, e.g. for fire protection, noise protection, breakin, bombardment and explosion safety, electromagnetic shielding etc., or
- as part of a machine, system or utility item, e.g. cooling units such as refrigerators and freezers, solar collectors, heating facilities, heat shields.

**Revendications**

**1.** Élément (10) de vitrage isolant, qui comprend :

- un arrangement de plaques de verre comportant une première plaque (1) de verre, orientée vers l'extérieur, une deuxième plaque (2) de verre, orientée vers l'intérieur et au moins une troisième plaque (3) de verre, disposée entre les plaques (1, 2) de verre, disposée à l'intérieur, sachant que les plaques de verre comportent des surfaces disposées à l'intérieur (1-2, 3-1, 3-2, 2-1),
- un moyen (5) d'écartement, installé en vue du réglage d'un écartement entre les plaques de verre, et
- un moyen d'étanchéité de bord (6, 6-1, 6-2, 601) qui est installé pour l'étanchéité d'espaces intermédiaires (4, 4-1, 4-2) entre les plaques de verre par rapport à un environnement, sachant que
- l'élément (10) de vitrage est agencé pour qu'une pression réduite par rapport à la pression atmosphérique extérieure s'établisse entre les espaces intermédiaires (4, 4-1, 4-2),

**caractérisé en ce que**

- au moins l'une des surfaces disposées à l'intérieur (1-2, 3-1, 3-2, 2-1) est munie d'au moins un revêtement faiblement émissif,
- les absorptions solaires $A_1$, $A_2$, des première et deuxième plaques (1, 2) de verre satisfont la condition $0,3 \leq (A_1/A_2) \leq 4$, et
- la troisième plaque (3) de verre présente une absorption solaire $A_3 \leq 0,17$.

**2.** Elément de vitrage suivant la revendication 1, pour lequel

- précisément un revêtement faiblement émissif est contenu, sachant que celui-ci est appliqué soit sur la surface (1-2) de la première plaque (1) de verre orientée vers l'extérieur, soit sur la surface (3-1) de la troisième plaque (3) de verre au moins unique, disposée entre les plaques (1, 2) de verre, disposée à l'intérieur,
- précisément deux revêtements faiblement émissifs sont inclus, dont l'un est appliqué sur la surface (1-2) disposée à l'intérieur de la plaque (1) de verre orientée vers l'extérieur,
- précisément trois revêtements faiblement émissifs sont inclus,
- le revêtement faiblement émissif présente une émissivité inférieure ou égale à 0,16, ou
- le revêtement faiblement émissif contient des paquets de couches argentifères, des couches métalliques semi transparentes, des oxydes conducteurs transparents, des mélanges de ceux-ci ou d'autres matériaux équivalents.

**3.** Élément de vitrage suivant au moins l'une des revendications précédentes, pour lequel

- la plaque (3) de verre au moins unique disposée à l'intérieur n'est pas revêtue.

**4.** Elément de vitrage suivant au moins l'une des revendications précédentes, pour lequel

- les première et deuxième plaques (1, 2) de verre présentent une épaisseur inférieure ou égale à 10 mm,
- la plaque (3) de verre au moins unique disposée à l'intérieur présente une épaisseur inférieure à celle des première et deuxième plaques (1, 2) de verre, et/ou
- la plaque (3) de verre au moins unique disposée à l'intérieur présente une épaisseur inférieure ou égale à 6 mm.

**5.** Elément de vitrage suivant au moins l'une des revendications précédentes, pour lequel

- les plaques (1, 2, 3) de verre consistent en matériaux durcis ou non durcis qui contiennent du verre sodo-calcique, des verres silicatés alcalins ou non alcalins, des verres cristallisés ou partiellement cristallisés ou des combinaisons de ceux-ci, et/ou
- les plaques (1, 2, 3) de verre durci présentent sur au moins une surface de verre une contrainte de compression superficielle d'au moins 75 MP a.

**6.** Elément de vitrage suivant au moins l'une des revendications précédentes, pour lequel

- des écarteurs (5) sont fixés sur les deux surfaces (3-1, 3-2) de la plaque (3) de verre au moins unique disposée à l'intérieur,
- la plaque (3) de verre au moins unique disposée à l'intérieur n'est pas reliée mécaniquement de façon rigide, au moins le long d'une arête, avec l'étanchéité de bord (6-1, 6-2, 601) des première et deuxième plaques (1, 2) de verre, et/ou
- la plaque (3) de verre au moins unique disposée à l'intérieur est réalisée sur toutes les arêtes, tout autour, plus petite que les première et deuxième plaques (1, 2) de verre et n'est reliée mécaniquement de façon rigide sur aucune des arêtes par l'intermédiaire de l'étanchéité de bord (6-1, 6-2, 601) avec les plaques (1, 2).

**7.** Elément de vitrage suivant la revendication 6, pour lequel

- les écarteurs (5) se composent, au moins partiellement, de substances dont la conductivité thermique est inférieure ou égale à 25 W/(m·K) et qui présentent une résistance à la pression d'au moins 350 MP a,
- les écarteurs (5) présentent un écartement réciproque moyen supérieur à 25 mm, un diamètre moyen inférieur ou égal à 1,5 mm et une hauteur du domaine comprise entre 0,1 mm et 1,5 mm, et/ou
- les écarteurs (5) sont constitués de corps de verre sphériques, discoïdes, annulaires ou en forme de plaque avec une dimension géométrique inférieure ou égale à 1,5 mm et en matériaux qui comprennent du verre sodo-calcique, des verres silicatés faiblement alcalins ou non alcalins, du verre de quartz, des verres cristallisés ou partiellement cristallisés ou des combinaisons de ceux-ci.

**8.** Elément de vitrage suivant au moins l'une des revendications précédentes, pour lequel

- l'étanchéité de bord (6, 6-1, 6-2, 6-3, 601) comprend des matériaux étanches au vide et est prévue tout autour avec une largeur d'au moins 3 mm,
- l'étanchéité de bord (6, 6-1, 6-2, 6-3, 601) contient au moins un matériau choisi dans les groupes de substances qui englobent les systèmes d'assemblage verre-métal ou verre de brasage (par exemple, métaux, composés ou alliages métalliques, tels que zinc, plomb, indium, cuivre, étain, zinc et/ou argent), verres se ramollissant à faible température ou matériaux vitreux similaires, frittes de verre, matériaux composites anorganiques et/ou organiques, composés sol-gel, colles ou autres systèmes polymères résistant à la perméation, et/ou
- l'étanchéité de bord (6, 6-1, 6-2, 6-3, 601) contient des colles et/ou des systèmes polymères résistant à la perméation qui comprennent, au moins partiellement, des matériaux organiques des classes de substances des acrylates, cyanoacrylates, résines, systèmes époxy, polyuréthane et/ou silane.

**9.** Elément de vitrage suivant au moins l'une des revendications précédentes, pour lequel

- les angles des plaques (1, 2, 3) de verre sont arrondis, sachant que les rayons d'arrondi sont d'au moins 5 mm,
- les angles des plaques (1, 2, 3) de verre sont pourvus d'un onglet, disposé de préférence des deux côtés, d'au moins 1 mm, et/ou
- les zones d'angle des plaques (1, 2, 3) de verre sont conçues de façon renforcée mécaniquement par du matériau d'étanchéité supplémentaire, sachant que la largeur $B_D$ de l'étanchéité de bord s'étendant arrondie sur les diagonales est, en particulier, d'au moins 8 mm.

**10.** Elément de vitrage suivant au moins l'une des revendications précédentes, qui

- présente une géométrie s'écartant de la planéité, incurvée ou fléchie, et/ou
- qui présente un coefficient de transfert thermique (indice U) inférieur ou égal à 0,8 W/ (m$^2$K).

**11.** Elément (20) de construction, qui présente au moins un élément (10) de vitrage suivant au moins l'une des revendications précédentes, sachant qu'au moins un élément (10) de vitrage est assemblé sur une face ou sur les deux faces avec au moins un composant (22, 23) de construction de verre par des matériaux composites (21-1, 21-2).

**12.** Elément de construction suivant la revendication 11, pour lequel

- le matériau composite (21-1, 21-2) est introduit sous la forme d'une feuille, d'un sandwich de feuilles et/ou d'un film et contient au moins une matière plastique qui est sélectionnée dans les groupes de matériaux qui comprennent le polybutyral de vinyle (PVB), le polyuréthane (PU), le polypropylène (PP), le polyacrylate, l'éthylène-vinyle-acétate (EVA), le polyéthylène, le polycarbonate, le polyméthacrylate de méthyle, le chlorure de polyvinyle, le téréphtalate de polyéthylène, la résine de polyacétate, les systèmes aux silicones, les copolymères de, par exemple, chlorure de vinyle, éthylène ou acrylates, résines moulées et colles thermodurcissables, durcissables aux ultraviolets ou à l'air, et/ou
- le matériau composite (21-1, 21-2) contient des additifs, des feuilles et/ou des couches métalliques.

**13.** Procédé en vue de la fabrication d'un élément (10) de vitrage selon au moins l'une des revendications 1 à 10, comportant les étapes :

- Mise à disposition des plaques (1, 2) de verre sur une pile de plaques de verre, et
- durcissement thermique de la pile de plaques de verre, sachant que les surfaces des plaques (1, 2) de verre qui sont disposées à l'extérieur sont durcies asymétriquement,
- assemblage des plaques (1, 2) de verre en disposition décalée, sachant que les surfaces durcies (1-1) de la première plaque (1) de verre orientée vers l'extérieur et (2-2) de la deuxième plaque (2) de verre orientée vers l'intérieur sont orientées l'une par rapport à l'autre et par rapport à un espace 4 intermédiaire, et
- finition de l'élément (10) de vitrage.

**14.** Procédé suivant la revendication 13, pour lequel la fixation mécanique s'effectue par cadre ou par d'autres constructions mécaniques découplées thermiquement les unes des autres séparément sur la face externe et/ou interne.

**15.** Utilisation d'un élément (10) de vitrage ou d'un élément de construction selon au moins l'une des revendications précédentes:

- en tant qu'élément de bâtiment, par exemple vitrages, verrières, cloisons de verre, écrans, éléments chauffants,
- en tant qu'élément d'un moyen de transport, par exemple, automobiles, navires, engins volants, véhicules ferroviaires,
- en tant qu'élément d'équipements de transport ou de stockage, par exemple, pour des objets refroidissants ou chauffants ou à refroidir ou à chauffer,
- en tant qu'élément de systèmes ou d'équipements de sécurité, par exemple, pour la protection contre les incendies, le bruit, la sécurité anti-intrusion, contre les tirs et les explosions, blindage électromagnétique, etc. ou
- en tant qu'élément d'une machine, installation ou en tant qu'objet utilitaire, par exemple, groupes frigorifiques, tels qu'armoires frigorifiques et congélateurs, collecteurs solaires, équipements de chauffage, écrans thermiques.

FIG. 1

FIG. 2

außen        innen

FIG. 3

FIG. 4

A

B

FIG. 5 (A, B)

FIG. 5 (C, D)

E

F

FIG. 5 (E. F)

FIG. 6

FIG. 7

FIG. 8

A

10

24

20

26

25

27

26

B

10

24

20

26

26

24 10

FIG. 9

außen

28

A

20

innen

28

außen

29

B

28

30

29

28

20

innen

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9102878 A

- WO 9315296 A